(19) **Europäisches Patentamt / European Patent Office / Office européen des brevets**

(11) **EP 4 692 769 A1**

(12) **EUROPEAN PATENT APPLICATION**
published in accordance with Art. 153(4) EPC

(43) Date of publication:
**11.02.2026 Bulletin 2026/07**

(21) Application number: **24779160.1**

(22) Date of filing: **05.03.2024**

(51) International Patent Classification (IPC):
**G01N 21/71** (2006.01)    **G01N 21/73** (2006.01)
**G01N 27/62** (2021.01)

(52) Cooperative Patent Classification (CPC):
**G01N 21/71; G01N 21/73; G01N 27/62**

(86) International application number:
**PCT/JP2024/008246**

(87) International publication number:
**WO 2024/203022 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056122
07.12.2023 JP 2023206660**

(71) Applicants:
• **FUJIFILM Corporation
Tokyo 106-8620 (JP)**
• **The University of Tokyo
Bunkyo-ku, Tokyo 113-8654 (JP)**

(72) Inventors:
• **SUGIYAMA Takuro
Ashigarakami-gun, Kanagawa 258-8577 (JP)**
• **TERAO Yuko
Ashigarakami-gun, Kanagawa 258-8577 (JP)**
• **HIRATA Takafumi
Tokyo 113-8654 (JP)**
• **HIRANA Yasuhiko
Ashigarakami-gun, Kanagawa 258-8577 (JP)**

(74) Representative: **HGF
HGF Limited
4th Floor, 1 City Square
Leeds LS1 2AL (GB)**

(54) **ANALYSIS METHOD**

(57)    An object of the present invention is to provide an analysis method in which analysis of an analysis object in a solid sample can be simply performed. An analysis method according to the present invention includes: creating a regression equation based on a value of a signal intensity obtained by performing any one of predetermined operation 1, 2, 3, or 4 and an amount of an analysis object that is removed by laser light irradiation in a standard sample film; and using the regression equation to calculate an amount of the analysis object that is removed by laser light irradiation in a solid analysis sample including the analysis object.

**Description**

**BACKGROUND OF THE INVENTION**

1. Field of the Invention

The present invention relates to an analysis method.

2. Description of the Related Art

A method of irradiating a sample with laser light for analysis is known as a method of qualitative analysis and quantitative analysis of a solid sample. In a case where high-intensity laser light is incident into a solid sample, characteristic emission for an element in the solid sample is generated, or a part of the solid sample is evaporated from the sample surface to produce gas or fine particles derived from the solid sample.

Examples of an analysis method of the solid sample used for the phenomenon that occurs in a case where the laser light is incident include laser-induced breakdown spectroscopy (LIBS), laser-ablation-inductively coupled plasma-optical emission spectrometry (LA-ICP-OES), and laser ablation-inductively coupled plasma-mass spectrometry (LA-ICP-MS). In LA-ICP-MS and LA-ICP-OES, the gas or the fine particles derived from the solid sample during the irradiation with laser light are introduced into an inductively coupled plasma, and are analyzed with a photodetector or a mass spectrometer.

With the above-described analysis methods, the qualitative analysis and the quantitative analysis of the solid sample can be performed.

Here, LA-ICP-OES and LA-ICP-MS are methods that are applicable to the solid sample. However, for a powder sample, the amount of the gas or the fine particles derived from the solid sample introduced into the inductively coupled plasma needs to be stabilized from the viewpoint of reproducibility of analysis. Here, in general, a method of forming the powder sample as a green compact is adopted.

Regarding this point, JP2013-238455A describes the invention of forming a sample disk for laser ablation by mixing fine powder of a resin and a powder sample with each other, heating the mixture to a melting point or higher of the resin, and cooling the mixture. JP2013-238455A describes that the reproducibility of analysis is ensured with the above-described invention.

**SUMMARY OF THE INVENTION**

In the analysis of the solid sample, a simpler method that does not require a pre-treatment or the like is required.

In the method described in JP2013-238455A, in order to obtain a sample for measurement, after mixing the resin powder and the powder sample to obtain a mixture, the mixture needs to be heated and cooled for forming. Therefore, it is difficult to say that this method is a simple method, and improvement has been required.

Accordingly, an object of the present invention is to provide an analysis method in which analysis of an analysis object in a solid sample can be simply performed.

The present inventors conducted a thorough investigation to achieve the object, thereby completing the present invention. That is, the present inventors have found that the object is achieved by the following configuration.

[1] An analysis method comprising:

creating a regression equation based on a value of a signal intensity obtained by performing any one of the following operation 1, 2, 3, or 4 and an amount of an analysis object that is removed by laser light irradiation in a standard sample film; and
using the regression equation to calculate an amount of the analysis object that is removed by laser light irradiation in a solid analysis sample including the analysis object,
the operation 1: an operation X of disposing the standard sample film including the analysis object on the solid analysis sample including the analysis object to obtain a laminate for analysis, irradiating the laminate for analysis with laser light, and detecting a signal intensity derived from the analysis object in the standard sample film and derived from the analysis object in the analysis sample is performed two or more times while changing a concentration of the analysis object in the standard sample film;
the operation 2: the operation X is performed at least once and at least an operation Y of irradiating the analysis sample with laser light and detecting a signal intensity derived from the analysis object in the analysis sample is performed;
the operation 3: the operation X is performed at least once and at least an operation Z of disposing a reference sample film not including the analysis object on the analysis sample to obtain a laminate for reference, irradiating the laminate for reference with laser light, and detecting a signal intensity derived from the analysis object in the analysis sample is performed; and

the operation 4: the operation X is performed two or more times while changing the number of the standard sample films laminated or a thickness of the standard sample film.

[2] The analysis method according to [1], further comprising:

a process of calculating a concentration of the analysis object in the analysis sample based on the amount of the analysis object that is removed by laser light irradiation in the analysis sample.

[3] The analysis method according to [1] or [2],

in which a removal volume of the analysis sample that is removed by laser light irradiation is determined by measuring a shape, and a volume concentration of the analysis object in the analysis sample is calculated based on the removal volume.

[4] The analysis method according to any one of [1] to [3],

in which the signal intensity is a signal intensity obtained by mass spectrometry.

According to the present invention, it is possible to provide an analysis method in which analysis of an analysis object in a solid sample can be simply performed.

## BRIEF DESCRIPTION OF THE DRAWINGS

FIGS. 1A and 1B are schematic cross sectional views showing a part of an operation X that is performed in the present invention.

FIGS. 2A and 2B are a schematic top view and a schematic cross sectional view showing a laminate for analysis used in Example.

FIG. 3 is a top view showing a porous adhesive tape used in one aspect of changing the number of standard sample films laminated in a fourth embodiment of the present invention.

FIGS. 4A to 4E are schematic cross sectional views showing the aspect of changing the number of standard sample films laminated in the fourth embodiment of the present invention.

FIG. 5 is a schematic cross sectional view showing the aspect of changing the number of standard sample films laminated in the fourth embodiment of the present invention.

FIGS. 6A to 6D are diagrams showing an aspect of an adhesive tape that may be used in the fourth embodiment of the present invention.

## DESCRIPTION OF THE PREFERRED EMBODIMENTS

Hereinafter, the present invention will be described in detail.

The description of the configuration requirements described below may be made based on the representative embodiments of the present invention, but the present invention is not limited to such embodiments.

Hereinafter, the same meanings are used in the present specification.

In the present specification, numerical ranges represented by "to" include numerical values before and after "to" as lower limit values and upper limit values.

<Analysis Method>

An analysis method according to an embodiment of the present invention comprises:

creating a regression equation based on a value of a signal intensity obtained by performing any one of the following operation 1, 2, 3, or 4 and an amount of an analysis object that is removed by laser light irradiation in a standard sample film; and

using the regression equation to calculate an amount of the analysis object that is removed by laser light irradiation in a solid analysis sample including the analysis object,

the operation 1: an operation X of disposing the standard sample film including the analysis object on the solid analysis sample including the analysis object to obtain a laminate for analysis, irradiating the laminate for analysis with laser light, and detecting a signal intensity derived from the analysis object in the standard sample film and derived from the analysis object in the analysis sample is performed two or more times while changing a concentration of the analysis object in the standard sample film;

the operation 2: the operation X is performed at least once and at least an operation Y of irradiating the analysis sample with laser light and detecting a signal intensity derived from the analysis object in the analysis sample is performed;

the operation 3: the operation X is performed at least once and at least an operation Z of disposing a reference sample film not including the analysis object on the analysis sample to obtain a laminate for reference, irradiating the laminate for reference with laser light, and detecting a signal intensity derived from the analysis object in the analysis sample is performed; and

the operation 4: the operation X is performed two or more times while changing the number of the standard sample films laminated or a thickness of the standard sample film.

In other words, the operation 4 corresponds to an operation of performing an operation W in which the standard sample film including the analysis object is laminated on the solid analysis sample including the analysis object while changing the number of the standard sample films laminated or a thickness thereof such that a plurality of laminates for analysis are obtained, the plurality of laminates for analysis are irradiated with laser light, and each of signal intensities derived from the analysis object in the standard sample film and analysis object in the analysis sample is detected.

The regression equation is created by using the obtained value of the signal intensity as a dependent variable and using the amount of the analysis object that is removed by laser light irradiation in the standard sample film as an independent variable.

In the analysis method according to the embodiment of the present invention, the standard sample film may be disposed on the analysis sample in the operation X and the operation W, and the reference sample film may be disposed on the analysis sample in the operation Z. Therefore, a pre-treatment is not necessary, and the measurement can be simply performed. In addition, in the operation Y, the pre-treatment is not necessary, and thus the measurement can be simply performed.

In addition, in the analysis method according to the embodiment of the present invention, even in a case where the analysis sample is a powder sample, the analysis sample does not need to be mixed with resin powder, and heating for melting the resin powder is also not necessary. Accordingly, in the analysis method according to the embodiment of the present invention, any chemical reaction caused by heating does not also progress, and the analysis sample does not also melt. Therefore, analysis of a wide variety of samples can be simply executed. In addition, components in the solid sample are also not segregated by the pre-treatment, and thus it is considered that the reproducibility of the measurement is also improved.

Hereinafter, the analysis method according to the embodiment of the present invention will be described in detail.

In the following description, it is assumed that a case where the operation 1 is performed is a first embodiment, a case where the operation 2 is performed is a second embodiment, a case where the operation 3 is performed is a third embodiment, and a case where the operation 4 is performed is a fourth embodiment.

<First Embodiment>

In the first embodiment of the analysis method according to the embodiment of the present invention, a regression equation is created based on a value of a signal intensity obtained by performing the following operation 1 and an amount of an analysis object that is removed by laser light irradiation in a standard sample film, and the regression equation is used to calculate an amount of the analysis object that is removed by laser light irradiation in a solid analysis sample including the analysis object.

The operation 1: an operation X of disposing the standard sample film including the analysis object on the solid analysis sample including the analysis object to obtain a laminate for analysis, irradiating the laminate for analysis with laser light, and detecting a signal intensity derived from the analysis object in the standard sample film and derived from the analysis object in the analysis sample is performed two or more times while changing a concentration of the analysis object in the standard sample film.

Hereinafter, first, the operation X will be described.

[Operation X]

In the operation X, the standard sample film including the analysis object is disposed on the solid analysis sample including the analysis object to obtain a laminate for analysis, the laminate for analysis is irradiated with laser light, and a signal intensity derived from the analysis object in the standard sample film and derived from the analysis object in the analysis sample is detected.

The signal intensity is a signal intensity obtained using an analysis unit described below.

Hereinafter, the operation X will be described in detail.

(Analysis Object)

The standard sample film and the analysis sample include the analysis object.

The analysis object is not particularly limited as long as a signal intensity is obtained by the analysis unit described below. Examples of the analysis object include a specific element, a specific group, and a specific organic molecule.

As the specific element, for example, a metal element is preferable. Examples of the metal element include metal elements belonging to Group 1 to Group 16 in the periodic table. Examples of the metal element belonging to Group 13 include aluminum (Al), gallium (Ga), indium (In), and thallium (Tl). Examples of the metal element belonging to Group 14 include germanium (Ge), tin (Sn), and lead (Pb). Examples of the metal element belonging to Group 15 in the periodic table include antimony (Sb) and bismuth (Bi). Examples of the metal element belonging to Group 16 in the periodic table include polonium (Po).

As the metal element, lithium (Li), sodium (Na), potassium (K), magnesium (Mg), calcium (Ca), strontium (Sr), barium (Ba), titanium (Ti), zirconium (Zr), vanadium (V), niobium (Nb), tantalum (Ta), chromium (Cr), molybdenum (Mo), manganese (Mn), iron (Fe), nickel (Ni), palladium (Pd), cobalt (Co), copper (Cu), silver (Ag), zinc (Zn), cadmium (Cd), mercury (Hg), aluminum (Al), gallium (Ga), thallium (Tl), or lead (Pb) is preferable.

The above-described specific element can be analyzed by, for example, mass spectrometry, emission spectrometry, or absorption spectrometry to obtain a signal intensity.

The specific group may be a group including a carbon atom or a group not including a carbon atom. In addition, the specific group may be a monovalent group or a divalent or higher group.

Examples of the specific group include a hydrocarbon group. Examples of the hydrocarbon group include an alkyl group, an alkynyl group, an alkenyl group, an aryl group, and a group including a combination of these groups. A linking group (for example, $-CH_2-$ or $-CH=$) including a carbon atom in the hydrocarbon group may be substituted with a linking group described below. In addition, a hydrogen atom in the hydrocarbon group may be substituted with a substituent described below.

In addition, the specific group may be a substituent described below.

Examples of the substituent include an aldehyde group (-CHO), a carboxy group (-COOH) and a salt thereof, a cyano group (-CN), a hydroxy group (-OH), an amino group ($-NR^T_2$), a nitro group ($-NO_2$), a sulfo group ($-SO_3H$) and a salt thereof, a phosphate group ($-PO_4H_2$) and a salt thereof, and a halogen atom (for example, F, Cl, Br, and I). $R^T$'s each independently represent a hydrogen atom or a hydrocarbon group that may have a substituent.

Examples of the linking group include an ether bond (-O-), a sulfide bond (-S-), an azo group (-N=N-), a carbonyl group (-CO-), an ester bond (-COO-), an amide bond ($-CONR^T-$), a urethane bond (-NH-COO-), and a siloxane bond ($(-SiR^T_2-O-)_n$). $R^T$'s each independently represent a hydrogen atom or a hydrocarbon group that may have a substituent, and n represents an integer of 1 or more.

The specific group may be a group relating to an environmentally regulated substance. The specific group is not particularly limited, and examples thereof include an alkyl halide group (for example, an alkyl fluoride group) and a group having a phthalic acid ester structure.

The above-described specific group can be analyzed by, for example, mass spectrometry to obtain a signal intensity. In the mass spectrometry, the specific group may be detected as ions of the specific group itself, or may be detected as one or more kinds of fragment ions derived from the specific group.

Examples of the specific organic molecule include an organic molecule including the specific group.

The specific organic molecule can be analyzed by, for example, mass spectrometry to obtain a signal intensity. In the mass spectrometry, the specific organic molecule may be detected as ions of the specific group itself, or may be detected as one or more kinds of fragment ions derived from the specific organic molecule.

The analysis object is included in the analysis sample and the standard sample film, and a chemical state or the like will be described below.

(Analysis Sample)

The analysis sample is solid, and includes the above-described analysis object. The analysis object in the analysis sample may be one kind or two or more kinds.

A material forming the analysis sample is not particularly limited as long as it is solid, and may be an inorganic matter, an organic matter, or a composite body of an inorganic matter and an organic matter. Examples of the inorganic matter include a metal, a semiconductor, a metal oxide, a metal nitride, a semiconductor oxide, a semiconductor nitride, a composite oxide, a composite nitride, a metal oxynitride, and a semiconductor oxynitride. Examples of the organic matter include a resin and a molecular organic compound.

A form of the analysis sample is also not particularly limited. Examples of a form of the analysis sample include a powder form, a film form, a plate form, and a massive form.

In addition, a method of disposing a solution including the analysis object on the standard sample film and removing a solvent component to obtain a film form, a massive form or the like is also applicable. In addition, a method of disposing a composition for forming the standard sample film described below on the analysis object and removing a solvent component to obtain a film form or the like is also applicable.

In a form where the analysis sample does not include a plane portion, it is preferable that the analysis sample is processed to form the plane portion before obtaining the laminate for analysis described below. For example, in a case where the analysis sample has a powder form, it is preferable that the powder is compacted to include the plane portion.

The analysis object only needs to be included in the analysis sample, and a chemical state of the analysis object in the analysis sample is not particularly limited.

In a case where the analysis object is a specific element, examples of a chemical state of the specific element include a metal state, a state of an oxide, a state of a nitride, a state bonded to an organic molecule, a state of a metal salt, and an ionized state.

In a case where the analysis object is a specific group, examples of the chemical state of the specific group include a non-ionized state and an ionized state. The specific group typically includes at least one of a molecular organic compound or a resin.

In a case where the analysis object is a specific organic molecule, examples of the chemical state of the specific organic molecule include a non-ionized state and an ionized state.

(Standard Sample Film)

The standard sample film includes the analysis object described below. The standard sample film includes the analysis object in the analysis sample or an analysis object corresponding to the analysis object in the analysis sample. The analysis object corresponding to the analysis object in the analysis sample refers to an analysis object having a different chemical state from that of the analysis object in the analysis sample, from which the same signal as that of the analysis object in the analysis sample can be acquired by the analysis unit described below.

In the operation X, as the standard sample film, a film where the content of the analysis object is known is used. The content of the analysis object in the standard sample film may be measured using a well-known unit. In a case where the standard sample film is manufactured using a unit described below, the content of each of components may be calculated from the preparation amount of each of the components in the analysis object or the like.

The standard sample film only needs to include the analysis object in the analysis sample or the analysis object corresponding to the analysis object in the analysis sample, and the chemical state of the analysis object in the standard sample film is not particularly limited.

In a case where the analysis object is a specific element, examples of a chemical state of the specific element include a metal state, a state of an oxide, a state of a nitride, a state bonded to an organic molecule, a state of a metal salt, and an ionized state. Among these, a metal salt state is preferable.

In a case where the analysis object is a specific group, examples of the chemical state of the specific group include a non-ionized state and an ionized state. The specific group typically includes at least one of a molecular organic compound or a resin.

In a case where the analysis object is a specific organic molecule, examples of the chemical state of the specific organic molecule include a non-ionized state and an ionized state.

The standard sample film is not particularly limited as long as it includes the analysis object, and preferably includes a polymer as a component other than the analysis object. In addition, the standard sample film may include hydrocarbon. Hereinafter, a preferable aspect of the standard sample film will be described.

It is preferable that the standard sample film includes a polymer.

The kind of the polymer in the standard sample film is not particularly limited, and examples thereof include a water-insoluble polymer and a water-soluble polymer. The water-soluble polymer is a polymer having a dissolution amount of 1 g or more in a case where the polymer is dried at 105°C for 2 hours and then dissolved in 100 g of water at 25°C. The water-insoluble polymer refers to a polymer other than the water-soluble polymer.

As described below, during the preparation of the standard sample film, in a case where water is used, the water-soluble polymer is preferably used, and in a case where an organic solvent is used, the water-insoluble polymer is preferably used.

Examples of the polymer include a (meth)acrylic polymer, a styrene-based polymer, an olefin-based polymer, a polyester-based polymer, a polyamide-based polymer, and a cellulose-based polymer.

The (meth)acrylic polymer is a general term for an acrylic polymer and a methacrylic polymer.

The (meth)acrylic polymer, styrene-based polymer, olefin-based polymer, polyester-based polymer, polyamide-based polymer, and the like exemplified above are likely to be water-insoluble polymers.

The styrene-based polymer is a polymer including the largest amount of a repeating unit derived from styrene in terms of mass ratio among all the repeating units.

From the viewpoint of further suppressing a variation in signal intensity depending on the measurement position of the standard sample film, the content of the repeating unit derived from styrene in the styrene-based polymer is preferably 50% by mass or more, more preferably 70% by mass or more, and still more preferably 90% by mass or more with respect to all the repeating units in the styrene-based polymer. The upper limit is not particularly limited and, for example, 100% by mass.

The (meth)acrylic polymer is a polymer including the largest amount of a repeating unit derived from an acrylic acid alkyl ester and/or a methacrylic acid alkyl ester in terms of mass ratio among all the repeating units.

From the viewpoint of further suppressing a variation in signal intensity, it is preferable that the (meth)acrylic polymer preferably includes a repeating unit derived from a (meth)acrylic acid alkyl ester having an alkyl group having 1 to 14 carbon atoms.

From the viewpoint of further suppressing a variation in signal intensity, the number of carbon atoms in the alkyl group of the (meth)acrylic acid alkyl ester is preferably 2 to 14, more preferably 3 to 10, and still more preferably 3 to 8.

The (meth)acrylic acid alkyl ester is a general term for an acrylic acid alkyl ester and a methacrylic acid alkyl ester.

Examples of the (meth)acrylic acid alkyl ester include methyl (meth)acrylate, ethyl (meth)acrylate, propyl (meth)acrylate, isopropyl (meth)acrylate, n-butyl (meth)acrylate, sec-butyl (meth)acrylate, 1,3-dimethylbutyl acrylate, pentyl (meth)acrylate, isopentyl (meth)acrylate, hexyl (meth)acrylate, 2-ethylbutyl (meth)acrylate, heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate.

From the viewpoint of further suppressing a variation in signal intensity, the content of the repeating unit derived from the (meth)acrylic acid alkyl ester having an alkyl group having 1 to 14 carbon atoms in the (meth)acrylic polymer is preferably 50% by mass or more, more preferably 70% by mass or more, and still more preferably 90% by mass or more with respect to all the repeating units contained in the (meth)acrylic polymer. The upper limit is not particularly limited and, for example, 100% by mass.

The olefin-based polymer is a polymer including the largest amount of a repeating unit derived from an olefin in terms of mass ratio among all the repeating units. Examples of the olefin include ethylene and propylene.

The polyester-based polymer is a polymer synthesized by dehydrating and condensing a polycarboxylic acid (dicarboxylic acid) and a polyalcohol (diol) to form an ester bond. Examples of the polyester-based polymer include polyethylene terephthalate, polyethylene naphthalate, and polybutylene terephthalate.

The polyamide-based polymer is a polymer formed by bonding a large number of monomers through an amide bond. Examples of the polyamide-based polymer include nylon 6 and nylon 6,6.

The cellulose-based polymer is a polymer having a cellulose skeleton. Examples of the cellulose-based polymer include diacetyl cellulose and triacetyl cellulose.

The water-soluble polymer is preferably a polymer including a repeating unit having at least one selected from the group consisting of a structure including a hydroxyl group, a structure including a pyrrolidone ring, and a structure including an oxyalkylene group.

Examples of the water-soluble polymer including a hydroxyl group include gum arabic, soybean gum, carboxymethyl cellulose, hydroxymethyl cellulose, hydroxyethyl cellulose, polyhydroxyethylated cellulose, hydroxypropyl cellulose, hydroxypropylmethyl cellulose, glyoxalated hydroxypropylmethyl cellulose, hydroxypropylmethyl cellulose phthalate, methyl cellulose, and polyvinyl alcohol.

Examples of the water-soluble polymer including a pyrrolidone ring include polyvinylpyrrolidone and a copolymer of vinylpyrrolidone and vinyl acetate.

Examples of the water-soluble polymer including an oxyalkylene group include polyalkylene glycols such as polyethylene glycol and polyoxyethylene polyoxypropylene glycol (also referred to as a polyoxyethylene-polyoxypropylene condensate), and polyoxyalkylene mono-alkyl or aryl ethers such as poly(ethylene glycol) methyl ether and poly(ethylene glycol) phenyl ether.

Among these, the water-soluble polymer is preferably a water-soluble polymer including a pyrrolidone ring or a polysaccharide, more preferably a water-soluble polymer including a pyrrolidone ring, and still more preferably polyvinylpyrrolidone.

Examples of the polysaccharide include polysaccharides, polysaccharide derivatives, and alkali metal salts thereof.

The cellulose-based polymer is preferably a compound in which at least a part of the hydroxyl group of cellulose is substituted with at least one selected from the group consisting of an alkyl group and a hydroxyalkyl group.

The content of the polymer in the standard sample film is not particularly limited, and is preferably 40% by mass or more, more preferably 60% by mass or more, still more preferably 80% by mass or more, and still more preferably 90% by mass or more with respect to the total mass of the standard sample film, from the viewpoint of further suppressing a variation in signal intensity. The upper limit is not particularly limited, but is likely to be less than 99% by mass, preferably 98% by mass or less, and more preferably 97% by mass or less.

The polymers may be used alone or in combination of two or more kinds thereof. In a case where two or more kinds of polymers are used in combination, the total content of the polymers is preferably in the above-described range.

The standard sample film may include hydrocarbon.

The kind of hydrocarbon is not particularly limited, and examples thereof include well-known hydrocarbons.

The hydrocarbon may be a saturated hydrocarbon or an unsaturated hydrocarbon, and is preferably a saturated hydrocarbon from the viewpoint of further suppressing a variation in signal intensity depending on the measurement position of the standard sample film.

The hydrocarbon may be an aliphatic hydrocarbon or an aromatic hydrocarbon, and an aliphatic hydrocarbon is preferable from the viewpoint of further suppressing a variation in signal intensity.

The hydrocarbon may be linear or branched. In addition, the hydrocarbon may have a cyclic structure.

The number of carbon atoms in the hydrocarbon is not particularly limited, and is preferably 5 or more, more preferably 10 or more, still more preferably 15 or more, and still more preferably 20 or more from the viewpoint of further suppressing a variation in signal intensity. The upper limit is not particularly limited, and is likely to be 40 or less and more likely to be 30 or less.

From the viewpoint of further suppressing a variation in signal intensity, as the hydrocarbon, an aliphatic saturated hydrocarbon is preferable, an aliphatic saturated hydrocarbon having 10 or more carbon atoms is more preferable, and paraffin is still more preferable.

In the present specification, paraffin refers to an aliphatic saturated hydrocarbon having 15 or more carbon atoms.

The SP value of the hydrocarbon is not particularly limited, and is preferably 14 to 18 $MPa^{1/2}$ and more preferably 15 to 17 $MPa^{1/2}$ from the viewpoint of further suppressing a variation in signal intensity.

A method of calculating the SP value is as follows.

The molecular structure of each material is input using a calculation program (HSPiP, ver. 4.1.07), and the Hansen solubility parameter (HSP) value $(\delta_D, \delta_P, \delta_H)$ is calculated using the HSP value calculation function attached to the program. Next, the SP value is calculated from the following expression.

$$\text{Expression} \quad \text{SP value} = (\delta_D^2 + \delta_P^2 + \delta_H^2)^{1/2}$$

The content of the hydrocarbon in the standard sample film is not particularly limited, and is preferably 1% to 60% by mass, more preferably 1% to 40% by mass, still more preferably 1% to 20% by mass, and still more preferably 1% to 10% by mass with respect to the total mass of the standard sample film, from the viewpoint of further suppressing a variation in signal intensity.

The hydrocarbons may be used alone or in combination of two or more kinds thereof. In a case where two or more kinds of hydrocarbons are used in combination, the total content of the hydrocarbons is preferably in the above-described range.

In a case where the standard sample film includes the hydrocarbon, the polymer in the standard sample film may be a polymer in which an absolute value of a difference in SP value from the hydrocarbon is 3.5 $MPa^{1/2}$ or less (hereinafter, also simply referred to as "specific polymer"). The specific polymer has high compatibility with the hydrocarbon.

The absolute value of the difference between the SP value of the specific polymer and the SP value of the hydrocarbon is preferably 2.5 $MPa^{1/2}$ or less, more preferably 2.0 $MPa^{1/2}$ or less, still more preferably 1.5 $MPa^{1/2}$ or less, and most preferably 1.0 $MPa^{1/2}$ or less from the viewpoint of further suppressing a variation in signal intensity. The lower limit of the absolute value of the difference is not particularly limited and is preferably 0.

It is preferable that the SP value of the specific polymer satisfies the range of the absolute value of the difference. From the viewpoint of further suppressing a variation in signal intensity, the SP value of the specific polymer is preferably 15 to 19 $MPa^{1/2}$ and more preferably 16 to 17 $MPa^{1/2}$.

A method of calculating the SP value is as follows.

The molecular structure of each material (the structure of the repeating unit in the specific polymer) is input using a calculation program (HSPiP, ver. 4.1.07), and the Hansen solubility parameter (HSP) value $(\delta_D, \delta_P, \delta_H)$ is calculated using the HSP value calculation function attached to the program. Next, the SP value is calculated from the following expression.

$$\text{Expression} \quad \text{SP value} = (\delta_D^2 + \delta_P^2 + \delta_H^2)^{1/2}$$

In a case where the specific polymer includes a plurality of repeating units, the product of an SP value of each of the repeating units and a molar ratio of the repeating unit to all the repeating units is calculated, and a total value of the products is obtained to calculate the SP value of the specific polymer. For example, in a case where the specific polymer includes a repeating unit A of $SP^A$ and a repeating unit B of $SP^B$, a molar ratio of the repeating unit A to all the repeating units is 0.2, and a molar ratio of the repeating unit B to all the repeating units is 0.8, the SP value of the specific polymer is

calculated as follows.

$$\text{SP Value of Specific Polymer} = (SP^A \times 0.2) + (SP^B \times 0.8)$$

In a case where the analysis object in the analysis sample includes a specific element, it is preferable that the standard sample film includes a salt of the specific element. The salt of the specific element is preferably a metal salt, more preferably a metal salt of an inorganic acid or a metal salt of an organic acid, and still more preferably a metal salt of an organic acid. In addition, the salt of the specific element may be a complex salt described below.

In a case where the analysis object in the analysis sample includes a specific element, the standard sample film may include a complex salt including the specific element.

In a case where the analysis object in the analysis sample includes a specific element, the standard sample film may include solid particles including the specific element.

The metal salt of the organic acid is a salt including the organic acid and the metal element.

Examples of the organic acid in the metal salt of the organic acid include compounds having an acid group selected from the group consisting of a sulfonate group, a carboxylic acid group, a phosphate group, a phenolic hydroxyl group, and a thiol group. Among these, a compound having a sulfonate group is preferable.

The organic acid preferably has a hydrocarbon group (an aliphatic hydrocarbon group or an aromatic hydrocarbon group), more preferably an aliphatic hydrocarbon group, and still more preferably an alkyl group. The number of carbon atoms in the hydrocarbon group (aliphatic hydrocarbon group or alkyl group) is not particularly limited, and is preferably 5 or more.

The organic acid may have both an aliphatic hydrocarbon group and an aromatic hydrocarbon group.

The organic acid is preferably a hydrocarbon having the above-described acid group and more preferably an alkylarylsulfonic acid, from the viewpoint of further suppressing a variation in signal intensity.

Preferable examples of the metal element in the metal salt include the metal elements described above regarding the specific element.

The metal salt of the inorganic acid is a salt including an inorganic acid and the metal element.

Examples of the inorganic acid in the metal salt of the inorganic acid include hydrochloric acid, nitric acid, sulfuric acid, and phosphoric acid.

Preferable examples of the metal element in the metal salt of the inorganic acid include the above-described metal elements.

In a case where the standard sample film includes a salt of a specific element, the content of the salt of the specific element is not particularly limited. From the viewpoint of further suppressing a variation in signal intensity, the concentration of a specific element derived from the salt of the specific element is preferably 0.1 to 1000 mass ppm and more preferably 0.1 to 300 mass ppm with respect to the total mass of the standard sample film.

The concentration of the specific element derived from the salt of the specific element in the standard sample film refers to the concentration of the specific element in the salt of the specific element in the standard sample film.

The salt of the specific element may be used alone or in combination of two or more kinds thereof. In a case where two or more kinds of salts of specific elements having different kinds of specific elements are used in combination, the concentration of the specific element derived from each of the salts of the specific elements is preferably in the above-described range.

The complex including the specific element is a complex including the specific element and a ligand.

The complex is not particularly limited, and examples thereof include an aqua complex, a sulfide complex, a halide (for example, fluoro, chloro, bromide, and iodo) complex, a hydride complex, a cyanate complex, an azide complex, a thiocyanate complex, an isothiocyanate complex, a nitro complex, a nitrito complex, an ammine complex, an amine complex, a diamine complex, a triamine complex, a tetramine complex, a pyridine complex, a diimine complex, a triimine complex, a porphyrin complex, a phthalocyanine complex, a phosphine complex, and a crown ether complex.

In addition, the complex including the specific element may be bonded to another kind of ions to form a complex salt.

The solid particles including the specific element are not particularly limited, and are preferably nanoparticles or nanofibers. In the present specification, the nanoparticles refer to particles having an average particle diameter of 1000 nm or less. In the present specification, the nanofibers refer to fibers where an average fiber diameter is 1000 nm or less and a ratio of an average fiber length to the average fiber diameter is 2 or more.

The nanoparticles and the nanofibers only need to include the specific element, and may include an element other than the specific element. That is, the nanoparticles and the nanofibers may also consist of a compound. In addition, in the nanoparticles and the nanofibers, elements may be unevenly distributed, for example, as in a core-shell structure.

Specific examples of the solid particles including the specific element are not particularly limited, and include copper particles, silver particles, gold particles, iron oxide particles, titanium oxide particles, zinc oxide particles, aluminum oxide (alumina) particles, indium tin oxide particles, cerium oxide (ceria) particles, cerium oxide-zirconium oxide (ceria-zirconia) particles, silicon particles, germanium particles, tin oxide particles, cadmium sulfide particles, zinc sulfide particles, cadmium sulfide-zinc sulfide particles, indium phosphide particles, copper sulfide-indium sulfide particles, lead sulfide particles, cadmium selenide particles, cadmium telluride particles, and silicon dioxide (silica) particles. The solid particles may be nanoparticles. In addition, in a case where particles among the solid particles including the specific element are formed of a semiconductor material, have a core-shell structure, and have a particle diameter controlled to several tens of nanometers, these particles will also be referred to as quantum dots. Examples of the quantum dots include InP/ZnS, CdSe/ZnS, CdS/ZnS, and CdZnS/ZnS (described in the form of a core material/a shell material).

In addition, as described above, the solid particles including the specific element may be nanofibers. Examples of the nanofibers include zinc oxide nanofibers, aluminum oxide nanofibers, and cerium oxide-zirconium oxide nanofibers.

In a case where the analysis object in the analysis sample is a specific group, it is preferable that the standard sample film includes a compound including the specific group. The compound including the specific group may be a compound including a repeating unit or a compound not including a repeating unit.

As described above, the specific group may be a group relating to an environmentally regulated substance, and the analysis object may be an environmentally regulated substance. The environmentally regulated substance is not particularly limited, and examples thereof include a halogenated alkane compound (for example, a fluorinated alkane compound), an alkyl halide ether compound (for example, an alkyl fluoride ether compound), and a phthalic acid ester compound.

It is preferable that the compound including the specific group has high compatibility with other components in the standard sample film.

In a case where the standard sample film includes the compound including the specific group, the content of the compound including the specific group is not particularly limited. From the viewpoint of further suppressing a variation in signal intensity, the content of the specific element of the compound including the specific group is preferably 0.1 to 10000 mass ppm and more preferably 0.1 to 300 mass ppm with respect to the total mass of the standard sample film.

In addition, it is preferable that the standard sample film includes a component that functions as an internal standard. By including the internal standard, the standard sample film can detect a variation in sensitivity during measurement.

The internal standard is preferably a component from which a signal that does not interfere with the analysis object can be obtained by the analysis unit described below. In addition, the internal standard is preferably a component that has the same behavior as the analysis object in the analysis unit described below.

For example, in a case where the analysis object is the specific element, preferable examples of the internal standard include an element that is not the analysis object. Specific examples of the element preferable as the internal standard include bismuth (Bi), holmium (Ho), indium (In), rhodium (Rh), scandium (Sc), terbium (Tb), and yttrium (Y). In a case where the internal standard is an element, the chemical state thereof is not particularly limited, for example, may be ionized in the standard sample film.

The content of the internal standard in the standard sample film is not particularly limited, and is preferably 0.01 to 100 mass ppm and more preferably 0.1 to 10 mass ppm with respect to the total mass of the standard sample film.

For example, in a case where the internal standard is a specific metal element, it is preferable that the content of the metal element is in the above-described range.

The standard sample film may include a surfactant.

In a case where the standard sample film includes a surfactant, the kind of the surfactant is not particularly limited. For example, a well-known surfactant can be used. Examples of the surfactant include a hydrocarbon-based surfactant, a fluorine-based and/or silicon-based surfactant (specifically, a fluorine-based surfactant, a silicon-based surfactant, and a surfactant having both a fluorine atom and a silicon atom). Among these, a fluorine-based and/or silicon-based surfactant (specifically, a fluorine-based surfactant, a silicon-based surfactant, and a surfactant having both a fluorine atom and a silicon atom) is preferable.

The standard sample film includes the surfactant such that coating defects (cissing, coating streaks, or surface unevenness) can be suppressed during application to a large area for forming a film.

Examples of the hydrocarbon-based surfactant include acetylene-based surfactants OLFINE D-10A, D-10PG, E1004, E1010, E1020, E1030W, PD-001, PD-002W, PD-004, PD-005, EXP. 4001, EXP. 4200, EXP. 4123, EXP. 4300, WE-001, WE-002, and WE-003 (manufactured by Nissin Chemical Co., Ltd.).

Examples of the fluorine-based and/or silicon-based surfactant include the surfactants described in paragraph [0276] of US2008/0248425A.

In addition, surfactants other than the fluorine-based and/or silicon-based surfactant described in paragraph [0280] of US2008/0248425A can also be used.

In addition, for example, MEGAFACE F-251, F-253, F-410, F-477, F-551, F-552, F-553, F-554, F-555, F-556, F-557, F-558, F-559, F-560, F-561, F-562, F-563, F-565, F-568, F-569, F-570, F-572, F-575, F- 576, R-40, R-40-LM, and R-41 (manufactured by DIC Corporation), FC4432 (manufactured by Sumitomo 3M Ltd.), SURFLON S-221, S-231, S-232, S-233, S-241, S-242, S-243, S-420, S-431, S-386, S-611, S-647, S-651, S-653, S-656, and S-693 (manufactured by AGC Seimi Chemical Co., Ltd.), PF-136A, PF-156A, and PF-151N (manufactured by OMNOVA Solutions Inc.), and FTERGENT 100, 100C, 150, 150CH, 251, 212M, 215M, 250, 222F, 245F, 208G, DFX- 18, 710FL, 710FM, 710FS, 610FM, and 683 (manufactured by Neos Company Limited) can also be used.

These surfactants may be used alone or in combination of two or more kinds thereof.

In a case where the standard sample film includes the surfactant, the content of the surfactant is preferably 0.0001% to 2% by mass and more preferably 0.0005% to 1% by mass with respect to the standard sample film.

In addition, a maximum height difference of a film thickness of the standard sample film is also preferably 0.50 $\mu$m or less. From the viewpoint of further suppressing a variation in signal intensity, the maximum height difference of the film thickness of the standard sample film is more preferably 0.30 $\mu$m or less, still more preferably 0.20 $\mu$m or less, and still more preferably 0.10 $\mu$m or less. The lower limit of the maximum height difference is not particularly limited, and is likely to be 0.001 $\mu$m or more.

The maximum height difference of the film thickness of the standard sample film is measured using the following method.

The film thickness of the standard sample film is calculated using a stylus profiler. A measured distance is 3 mm, and a scanning rate is 0.02 mm/sec. A 3 mm straight line on which the first measurement is performed is defined as a scanning line 1, and the second measurement is performed at a position having a distance of 0.2 mm or more in a direction perpendicular to the scanning line 1. Next, the same measurement is repeated to perform the measurement 10 times in total. The measurement (scanning) is performed 10 times to obtain a maximum value and a minimum value of the film thickness for each scanning, and a difference (value A - value B) between the largest value A among the 10 maximum values obtained by performing scanning 10 times and the smallest value B among the 10 minimum values obtained by performing scanning 10 times is defined as the maximum height difference of the film thickness.

An average film thickness of the standard sample film is not particularly limited, and is preferably 3.5 $\mu$m or less, more preferably 2.5 $\mu$m or less, and still more preferably 2.0 $\mu$m or less from the viewpoint of further suppressing a variation in signal intensity. The lower limit of the average film thickness is not particularly limited, and is preferably 0.05 $\mu$m or more and more preferably 0.1 $\mu$m or more from the viewpoint of measurement accuracy.

The average film thickness is obtained by measuring the thicknesses at any 20 points with a stylus profiler and arithmetically averaging the measured values.

The standard sample film may be subjected to the operation X in a state of being laminated on a substrate described below.

Examples of the substrate include a substrate described below. In particular, from the viewpoint of further improving the measurement accuracy, an organic substrate formed of an organic material is preferable, and a resin film is more preferable.

In a case where the standard sample film is subjected to the operation X in a state of being laminated on the substrate, it is preferable that the substrate does not include the analysis object or the content of the analysis object is small.

In a case where the standard sample film is subjected to the operation X in a state of being laminated on the substrate, from the viewpoint of further improving the analysis accuracy, a total film thickness of the standard sample film and the substrate in terms of an average film thickness is preferably 100 $\mu$m or less, more preferably 50 $\mu$m or less, still more preferably 25 $\mu$m or less, still more preferably 20 $\mu$m or less, still more preferably 15 $\mu$m or less, still more preferably 10 $\mu$m or less, and still more preferably 8 $\mu$m or less. In a case where the average value (average film thickness) of the total film thickness of the standard sample film and the substrate is in the preferable range, it is considered that unevenness is not likely to occur in the ablation amount of the standard sample film during laser light irradiation described below, and the analysis accuracy is further improved.

In addition, from the viewpoint of handleability in a state where the standard sample film is laminated on the substrate, the average value (average film thickness) of the total film thickness of the standard sample film and the substrate is preferably 0.1 $\mu$m or more, more preferably 0.2 $\mu$m or more, still more preferably 0.5 $\mu$m or more, still more preferably 1.2 $\mu$m or more, still more preferably 1.3 $\mu$m or more, still more preferably 2.0 $\mu$m or more, still more preferably 3.0 $\mu$m or more, and most preferably 3.5 $\mu$m or more.

The average film thickness can be measured using the same method as that of the standard sample film.

(Method of Forming Standard Sample Film)

A method of forming the standard sample film is not particularly limited.

For example, in a case where the analysis object is a specific element and a metal salt of an organic acid is used as a salt of the specific element, for example, it is possible to use a method including a step of preparing a composition for forming the standard sample film including a polymer (in particular, the water-insoluble polymer), the metal salt of the organic acid, optionally used other components (for example, the internal standard, the hydrocarbon, and the surfactant), and an organic solvent, and a step of applying the obtained composition for forming the standard sample film to the substrate to form a standard sample film. In addition, in a case where a metal salt of an inorganic acid is used as the salt of the specific element, for example, it is possible to use a method including a step of preparing a composition for forming the standard sample film including a polymer (in particular, the water-soluble polymer), the metal salt of the organic acid, optionally used other components (for example, the internal standard and the surfactant), and an aqueous solution including the inorganic acid, and a step of applying the obtained composition for forming the standard sample film to the substrate to form a standard sample film.

That is, it is possible to use a method including a step of applying a composition for forming the standard sample film including at least a polymer, a supply source of a metal element, the internal standard, and a solvent onto the substrate to form a standard sample film.

In particular, from the viewpoint that the standard sample film can be formed with high productivity, a method of forming the standard sample film including a step of applying a composition for forming the standard sample film including the hydrocarbon, the metal salt of the organic acid, the polymer in which the absolute value of the difference in SP value from the hydrocarbon is 3.5 MPa$^{1/2}$ or less, the internal standard, and the solvent to form a standard sample film is preferable.

The hydrocarbon, the metal salt of the organic acid, and the internal standard are as described above.

The polymer (specific polymer) in which the absolute value of the difference in SP value from the hydrocarbon is 3.5 MPa$^{1/2}$ or less has compatibility with the hydrocarbon.

The specific polymer is as described above.

It is preferable that the content of the specific polymer contained in the composition for forming the standard sample film is adjusted so as to be the content of the polymer in the standard sample film.

It is preferable that the content of the metal salt of the organic acid in the composition for forming the standard sample film is adjusted so as to be the content of the metal element in the standard sample film.

It is preferable that the content of the internal standard in the composition for forming the standard sample film is adjusted so as to be the content of the internal standard in the standard sample film.

The content of the hydrocarbon contained in the composition for forming the standard sample film is preferably 1% to 60% by mass, more preferably 1% to 40% by mass, still more preferably 1% to 20% by mass, and still more preferably 1% to 10% by mass with respect to the total amount of the specific polymer, the metal salt of an organic acid, and the hydrocarbon.

The solvent contained in the composition for forming the standard sample film may be any solvent that can dissolve various components described above. Examples of the solvent include an organic solvent and water. Among these, an organic solvent is preferable. Examples of the organic solvent include a ketone-based solvent, an alcohol-based solvent, an ether-based solvent, a hydrocarbon-based solvent, and an ester-based solvent. Among these, a ketone-based solvent or an ester-based solvent is preferable.

Specific examples of the solvent include methyl ethyl ketone, butyl acetate, toluene, hexane, acetone, and chloroform.

The concentration of the solvent in the composition for forming the standard sample film is not particularly limited, and the content of the solvent with respect to the total mass of the composition is preferably 60% to 99% by mass and more preferably 70% to 99% by mass from the viewpoint that a film having high thickness uniformity can be obtained.

The method of applying the composition for forming the standard sample film to a substrate is not particularly limited, and examples thereof include well-known methods (for example, a spin coating method, a dip coating method, and an ink jet method).

The kind of the substrate is not particularly limited, and examples thereof include quartz, a glass substrate, and a silicon wafer from the viewpoint of excellent flatness. In addition, from the viewpoint of handleability, a resin film (for example, a polyethylene terephthalate film, a polyethylene naphthalate film, or a polypropylene film) may be used as the substrate.

After applying the composition for forming the standard sample film to the substrate, optionally, a drying treatment may be performed to remove the solvent in the coating film. Examples of a method of the drying treatment include a heating treatment. The hydrocarbon may be volatilized and removed during the drying treatment.

The substrate may be a temporary support.

In a case where the substrate is a temporary support, a transfer film including the temporary support and the standard sample film disposed on the temporary support is formed. By bringing the standard sample film on the temporary support of this transfer film into contact with a transfer target material and peeling off the temporary support, the standard sample film can be disposed on the transfer target material. By using this transfer film, the standard sample film can be disposed on transfer target materials having various shapes.

Examples of the temporary support include a support whose surface is treated with a release agent (for example, a silicone-based release agent), and a support that itself has releasability.

The temporary support is preferably a polymer substrate.

Examples of a material forming the temporary support include a cellulose-based polymer, a (meth)acrylic polymer, a styrene-based polymer, an olefin-based polymer, a polyester-based polymer, and a polyamide-based polymer.

A water contact angle on a side of the temporary support on which the standard sample film is disposed is not particularly limited, and is preferably 100 degrees or more from the viewpoint of further improving the transferability of the standard sample film.

Examples of a method of measuring the water contact angle include a static drop method described in JIS R 3257: 1999. Specifically, the water contact angle is a water contact angle measured using a contact angle meter FTA 1000 (software FTA 32) (manufactured by First Ten Angstroms, Inc.) under conditions of a room temperature of 25°C and a humidity of 50%. More specifically, regarding liquid droplets of pure water on the surface of the horizontally maintained temporary support immediately before a timing of moment 30 seconds is elapsed after dropping 1.5 $\mu$l of pure water on the surface of the temporary support, a radius r and a height h are obtained, and a water contact angle $\theta$ is a value calculated from the expression $\theta = 2 \arctan (h/r)$.

(Laminate for Analysis)

The laminate for analysis is obtained by disposing the standard sample film on the solid analysis sample including the analysis object.

A method of disposing the standard sample film on the analysis sample is not particularly limited as long as the standard sample film can be disposed on the analysis sample.

Specific examples of the method of disposing the standard sample film include a method of bonding the standard sample film to the analysis sample, a method of pressing the standard sample film with a jig and holding the pressed state, and a method of disposing the analysis sample on the standard sample.

It is preferable that the analysis sample and the standard sample film are disposed to be in direct contact with each other in the laminate for analysis.

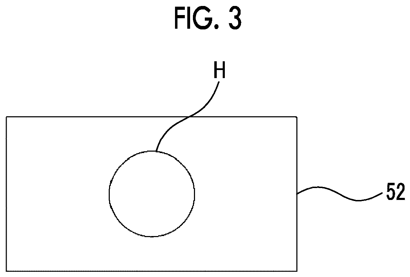

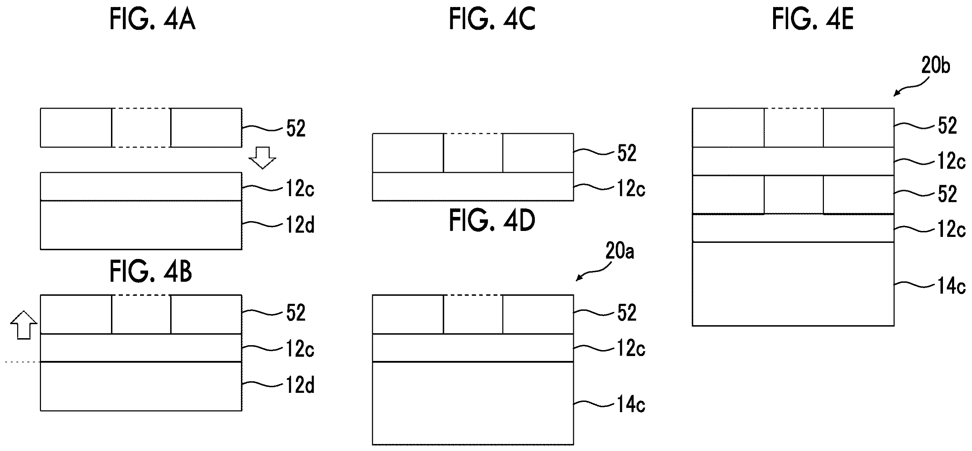

The laminate for analysis may also be obtained using a method described in a fourth embodiment below (refer to FIG. 3 and FIGS. 4A to 4D).

The laminate for analysis may include the substrate (for example, a resin substrate) used for preparation of the standard sample film. In a case where the laminate for analysis may include the substrate (for example, a resin substrate) used for preparation of the standard sample film, it is preferable that the substrate is disposed on a side of the standard sample film opposite to the analysis sample side.

The laminate for analysis may be obtained in a state of being held in a sample holder.

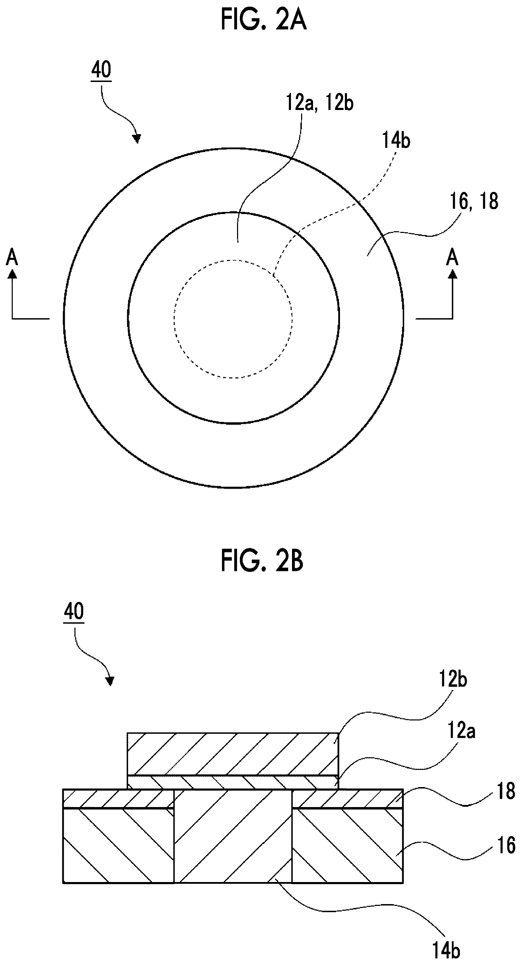

Examples of the sample holder include a sample holder including a support substrate that includes a recess portion filled with the analysis sample and an adhesive layer that is disposed in a surface region other than the recess portion on the surface where the recess portion is provided. In addition, another example of the sample holder includes a sample holder including a support substrate (refer to a pellet frame 16 of FIGS. 2A and 2B) that includes a through-hole filled with the analysis sample and an adhesive layer (refer to a double-sided tape 18 of FIGS. 2A and 2B) that is disposed in a surface region other than the through-hole.

In the sample holder, the analysis sample is held in the recess portion or the through-hole portion of the support substrate, and the standard sample film is held in a state of being in contact with the analysis sample through the adhesive layer.

A material forming the support substrate of the sample holder is not particularly limited as long as it can hold the analysis sample, and a well-known material can be used. Examples of the material forming the support substrate include paper, cellulose, a plastic material, a metal, and glass.

A shape of the recess portion or the through-hole portion in the support substrate is not particularly limited, and may be a quadrangular shape or a circular shape. The shape of the recess portion or the through-hole portion in the support substrate refers to a shape in observation from the normal direction of one surface of the support substrate. The size of the recess portion or the through-hole portion in the support substrate is not particularly limited as long as it is wider than a range irradiated with laser light. In a case where the shape of the recess portion or the through-hole portion in the support substrate is a circular shape, a diameter thereof is, for example, 0.1 to 5.0 mm.

In addition, it is preferable that the recess portion or the through-hole portion in the support substrate has a fixed area in a thickness direction of the support substrate. In the above-described aspect, in a case where the analysis sample is a powder sample and the powder sample is compacted to hold the analysis sample in the sample holder, the density is likely to be uniform during the powder compaction.

The shape, the size, and the thickness of the support substrate can be appropriately selected.

The adhesive layer in the sample holder is not particularly limited as long as it can hold the standard sample film.

In particular, in the adhesive layer, a peel force on a side in contact with the support substrate is preferably higher than a peel force on a side in contact with the standard sample film. By adopting the adhesive layer in the aspect, the standard sample film can be easily peeled off and removed from the sample holder after laser light irradiation described below in detail, and the volume of the analysis sample removed by laser light irradiation can be easily measured as described below. In addition, by adopting the adhesive layer in the aspect, for example, the standard sample film can be bonded again, and the handleability is further improved.

The peel force on the side of the adhesive layer in contact with the standard sample film is preferably, for example, 0.1 N/25 mm or lower. The peel force is obtained by measuring a force required for peeling off a film having a width of 25 mm bonded to an acrylic resin substrate at a speed of 1200 mm/min in a direction of 180 degrees.

A material forming the adhesive layer is not particularly limited. For example, a well-known material having an adhesion function and a pressure sensitive adhesion function can be adopted. Examples of the material forming the adhesive layer include an acrylic resin, a silicone resin, a urethane resin, natural rubber, and synthetic rubber. From the viewpoint that the peel force is likely to be satisfied, a silicone resin is preferable.

As the adhesive layer, for example, a commercially available double-sided tape can be used.

(Laser Light Irradiation)

In the operation X, the laminate for analysis is irradiated with laser light. The laser light irradiation may be performed from the side of the laminate for analysis where the standard sample film is disposed, or may be performed from the side of the laminate for analysis where the analysis sample is disposed.

The laser light irradiation is performed such that, in order to obtain a signal intensity derived from the analysis object in the standard sample film and derived from the analysis object in the analysis sample, the standard sample film is ablated by laser light and the analysis sample is ablated by laser light.

That is, in a case where the laser light irradiation is performed from the side of the laminate for analysis where the standard sample film is disposed, the laser light irradiation is performed such that the standard sample film is ablated to form a through-hole and the analysis sample is irradiated with laser light through the through-hole to ablate the analysis sample.

In addition, in a case where the laser light irradiation is performed from the side of the laminate for analysis where the analysis sample is disposed, the laser light irradiation is performed such that the standard sample is ablated to form a through-hole and the standard sample film is irradiated with laser light through the through-hole to ablate the standard sample film.

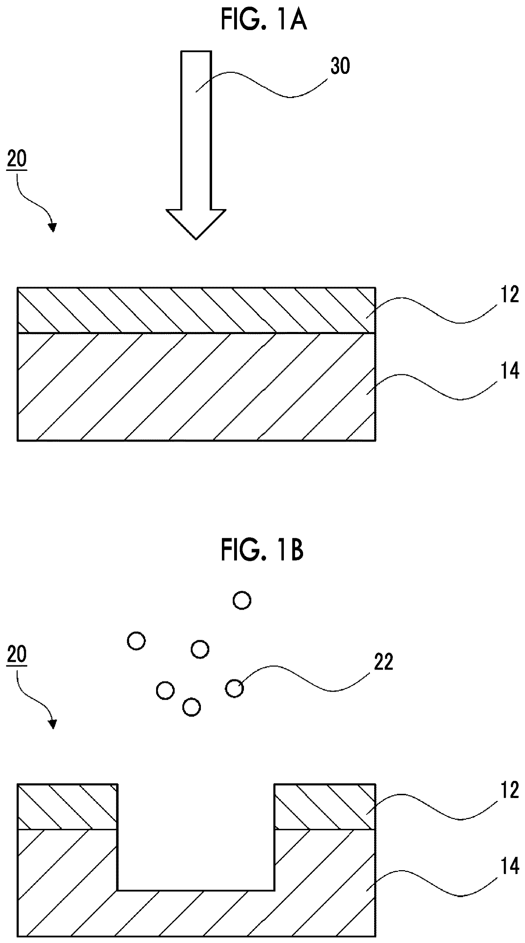

In a case where the laser light irradiation is performed from the side of the laminate for analysis where the standard sample film is disposed, the laser light irradiation will be described using FIGS. 1A and 1B.

FIGS. 1A and 1B are schematic cross sectional views showing a laminate for analysis 20 where a standard sample film 12 and an analysis sample 14 are laminated. First, as shown in FIG. 1A, irradiation of laser light 30 is performed from the standard sample film 12 side of the laminate for analysis 20. Due to the irradiation of the laser light 30, the standard sample film 12 and the analysis sample 14 are ablated such that, as shown in FIG. 1B, a through-hole is formed in the standard sample film 12 and a part of the analysis sample 14 is removed to form an ablation sample 22. For example, in a case where the analysis unit described below is LA-ICP-MS, the ablation sample 22 is introduced into a detector of the analysis unit.

In addition, the laser light irradiation may be performed from the side of the laminate for analysis where the analysis sample is disposed, and can be performed using the same method as the above-described method.

An irradiation method of the laser light on the standard sample film is not particularly limited, and it is preferable that the same region is repeatedly irradiated with pulsed laser light to ablate the analysis sample.

A wavelength of the laser light to be irradiated is not particularly limited, and from the viewpoint of further suppressing a variation in signal intensity, is preferably 200 to 300 nm and more preferably 230 to 260 nm.

A pulse intensity of the laser light to be irradiated is not particularly limited, and from the viewpoint of further suppressing a variation in signal intensity, is preferably 5.0 to 20.0 J/cm$^2$ and more preferably 12.0 to 18.0 J/cm$^2$.

A pulse width of the laser light to be irradiated is not particularly limited, and from the viewpoint of further suppressing a variation in signal intensity, is preferably 200 to 300 fs and more preferably 230 to 250 fs.

A frequency of the laser light to be irradiated is not particularly limited, and from the viewpoint of further suppressing a variation in signal intensity, is preferably 5000 to 20000 Hz and more preferably 8000 to 12000 Hz.

An irradiation time of the laser light is not particularly limited, and from the viewpoint of further suppressing a variation in signal intensity, is preferably 0.5 to 3.0 seconds and more preferably 1.5 to 2.5 seconds.

An irradiation region of the laser light is not particularly limited, and is likely to be a region having a length of 0.1 to 1.0 mm and a width of 0.1 to 1.0 mm.

The laser light irradiation may be performed on a plurality of positions of the laminate for analysis such that signal intensities are obtained from the respective positions and the obtained signal intensities are arithmetically averaged to obtain the signal intensity detected in the operation X.

In a case where the laser light irradiation is performed on a plurality of positions of the laminate for analysis, it is preferable that the regions irradiated with laser light are spaced from each other by a length of one side of the irradiation region. In addition, in a case where the laser light irradiation is performed on a plurality of positions of the laminate for analysis, the number of the positions to be irradiated is not particularly limited and is typically likely to be 5 to 20.

(Signal Intensity)

In the operation X, the laser light irradiation is performed on the laminate for analysis to detect a signal intensity derived from the analysis object in the standard sample film and derived from the analysis object in the analysis sample.

The signal intensity is obtained by various analysis units.

Examples of the analysis unit include a method of analyzing emission generated by laser light irradiation using a spectroscopic analyzer, a method of analyzing, using a spectroscopic analyzer, emission generated in a case where gas or fine particles derived from the standard sample film and the analysis sample that are ablated by laser light irradiation are introduced into an inductively coupled plasma, and a method of analyzing, using a mass spectrometer, ions generated in a case where gas or fine particles derived from the standard sample film and the analysis sample that are ablated by laser light irradiation are introduced into an inductively coupled plasma and ionized.

The method of analyzing the emission generated by laser light irradiation using a spectroscopic analyzer is also called laser-induced breakdown spectroscopy (LIBS). The method of analyzing, using a spectroscopic analyzer, emission generated in a case where gas or fine particles derived from the standard sample film and the analysis sample that are ablated by laser light irradiation are introduced into an inductively coupled plasma is also called laser-ablation-inductively coupled plasma-optical emission spectrometry (LA-ICP-OES). The method of analyzing, using a mass spectrometer, ions generated in a case where gas or fine particles derived from the standard sample film and the analysis sample that are ablated by laser light irradiation are introduced into an inductively coupled plasma and ionized is also called laser ablation-inductively coupled plasma-mass spectrometry (LA-ICP-MS).

According to LIBS, a luminescence intensity derived from the analysis object is obtained as the signal intensity.

According to LA-ICP-OES, a luminescence intensity derived from the analysis object is obtained as the signal intensity.

According to LA-ICP-MS, an ion intensity derived from the analysis object is obtained as the signal intensity.

In the analysis unit, the analysis is continuously performed for a period of time corresponding to a period of time where the laser light irradiation is performed, and an average value per hour is obtained as the signal intensity.

In addition, in a case where the standard sample film includes an internal standard, the signal intensity derived from the analysis object may be corrected based on a signal intensity derived from the internal standard. For example, a value obtained by dividing the signal intensity derived from the analysis object by the signal intensity derived from the internal standard may be used as the value of the signal intensity obtained in the operation 1 described below to create the regression equation.

The signal intensity is preferably a signal intensity obtained by mass spectrometry. More specifically, the signal intensity is preferably a signal intensity obtained by LA-ICP-MS.

In a case where the laminate for analysis includes two or more kinds of analysis objects, signal intensities derived from the two or more kinds of analysis objects may be obtained simultaneously, or a signal intensity derived from each kind of the analysis objects may be obtained.

[Operation 1 and Creation of Regression Equation]

As described above, in the first embodiment of the analysis method according to the embodiment of the present invention, the following operation 1 is performed.

The operation 1: an operation X of disposing the standard sample film including the analysis object on the solid analysis sample including the analysis object to obtain a laminate for analysis, irradiating the laminate for analysis with laser light, and detecting a signal intensity derived from the analysis object in the standard sample film and derived from the analysis object in the analysis sample is performed two or more times while changing a concentration of the analysis object in the standard sample film.

That is, the operation X is performed on two or more laminates for analysis where the concentrations of the analysis objects in the standard sample film are different, to detect a signal intensity derived from the analysis object in the standard sample film and derived from the analysis object in the analysis sample.

In the operation 1, the number of the laminates for analysis where the concentrations of the analysis objects in the standard sample film are different and on which the operation X is performed is 2 or more. However, the number of the laminates for analysis where the concentrations of the analysis objects in the standard sample film are different and on which the operation X is performed can be adjusted depending on desired analysis accuracy. From the viewpoint of the analysis accuracy, the number of the laminates for analysis where the concentrations of the analysis objects in the standard sample film are different and on which the operation X is performed is preferably 3 to 20, more preferably 5 to 20, and still more preferably 5 to 10.

Next, the regression equation is created based on the value of the signal intensity obtained in the operation 1 and the amount of the analysis object that is removed by laser light irradiation in the standard sample film.

The amount of the analysis object that is removed by laser light irradiation in the standard sample film can be calculated from the volume of the standard sample film removed by laser light irradiation and the known content of the analysis object in the standard sample film.

The volume of the standard sample film removed by laser light irradiation can be calculated from a previously measured film thickness of the standard sample film and the area of the region of the standard sample film removed by laser light irradiation. A method of measuring the film thickness of the standard sample film is as described above. The area of the removed region of the standard sample film can be calculated, for example, by measuring a shape. The measurement of the shape may be performed on the laminate for analysis after laser light irradiation, or can be performed, for example, using an optical microscope, an optical interferometer, or a stylus profiler.

The content of the analysis object in the standard sample film can be controlled based on the amount of the analysis object to be added during the formation of the standard sample film. The content of the analysis object in the standard sample film to be used can be appropriately adjusted depending on the content of the analysis object in the analysis sample.

In the operation 1, in a case where the horizontal axis represents the content of the analysis object in the standard sample film and the vertical axis represents the signal intensity, two or more points are plotted. Therefore, the regression equation can be created based on the plots. The regression equation can be created, for example, by linear regression. For example, in a case where the regression equation is created by linear regression, an absolute value of a value at an intersection between a straight line of the regression equation and the horizontal axis represents the amount of the analysis object in the analysis sample removed by laser light irradiation.

In a case where the operation X is performed three or more times in the operation 1, the regression equation can be created by determining a coefficient or the like with a least-squares method or the like using each of the plots.

In addition, the concentration of the analysis object in the analysis sample can be calculated from the amount of the analysis object in the analysis sample removed by laser light irradiation and the amount of the analysis sample removed by laser light irradiation. As the amount of the analysis sample removed by laser light irradiation, for example, the volume of the analysis sample removed by laser light irradiation can be used, and the volume density of the analysis object in the analysis sample can be calculated. The volume of the analysis sample removed by laser light irradiation can be calculated by performing the above-described method of measuring the shape on the laminate for analysis after laser light irradiation.

In addition, by separately measuring the density of the analysis sample in a state where the volume density of the analysis object in the analysis sample is calculated, the mass density of the analysis object in the analysis sample can be calculated. As a method of measuring the density, a well-known method is applicable.

The coefficient or the like in the regression equation obtained from the procedure may also be corrected based on the amount of the analysis sample removed by laser light irradiation. In a specific procedure, for example, first, the coefficient or the like in the regression equation is determined without performing the correction using the amount of the analysis sample removed by laser light irradiation. Next, the obtained amount of the analysis object in the analysis sample removed by laser light irradiation and the amount of the ablated analysis sample in the analysis sample are compared to each other to correct the signal intensity in the vertical axis. Based on the corrected signal intensity, the coefficient or the like in the regression equation is obtained again.

The correction using the amount of the analysis sample removed by laser light irradiation may also be performed using a method other than the above-described method.

In a case where the laminate for analysis includes two or more kinds of analysis objects, the regression equation of each of the analysis objects is created using the procedure, and the amount of the analysis object in the analysis sample is calculated.

<Second Embodiment>

In the second embodiment of the analysis method according to the embodiment of the present invention, a regression equation is created based on a value of a signal intensity obtained by performing the following operation 2 and an amount of an analysis object that is removed by laser light irradiation in a standard sample film, and the regression equation is used to calculate an amount of the analysis object that is removed by laser light irradiation in a solid analysis sample including the analysis object.

The operation 2: the operation X is performed at least once and at least an operation Y of irradiating the analysis sample with laser light and detecting a signal intensity derived from the analysis object in the analysis sample is performed.

The operation X is the same as described above in the first embodiment, and thus the description thereof will not be repeated.

Hereinafter, the operation Y will be described.

[Operation Y]

In the operation Y, the analysis sample is irradiated with laser light, and a signal intensity derived from the analysis object in the analysis sample is detected.

The analysis sample and the analysis object are as described above in the first embodiment.

The operation Y is different from the operation X of irradiating the laminate for analysis with laser light, in that the analysis sample is directly irradiated with laser light. However, the other points are the same as those of the operation X.

Preferable conditions of the laser light irradiation are the same as those of the operation X. In addition, a preferable aspect during the detection of the signal intensity is the same as that of the operation X.

[Operation 2 and Creation of Regression Equation]

As described above, in the second embodiment of the analysis method according to the embodiment of the present invention, the following operation 2 is performed.

The operation 2: the operation X is performed at least once and at least an operation Y of irradiating the analysis sample with laser light and detecting a signal intensity derived from the analysis object in the analysis sample is performed.

That is, in the operation 2, the operation X is performed once or more on the laminate for analysis, and the operation Y is performed on the analysis sample. In the operation X, a signal intensity derived from the analysis object in the standard sample film and derived from the analysis object in the analysis sample is detected, and in the operation Y, a signal intensity derived from the analysis object in the analysis sample is detected.

In the operation 2, the number of the laminates for analysis on which the operation X is performed is one or more. However, the operation X may also be performed on two or more laminates for analysis where the concentrations of the analysis objects in the standard sample film are different. However, the number of the laminates for analysis where the concentrations of the analysis objects in the standard sample film are different and on which the operation X is performed can be adjusted depending on desired analysis accuracy. From the viewpoint of the analysis accuracy, the number of the laminates for analysis where the concentrations of the analysis objects in the standard sample film are different and on which the operation X is performed is preferably 3 to 20, more preferably 5 to 20, and still more preferably 5 to 10.

Next, the regression equation is created based on the value of the signal intensity obtained in the operation 2 and the amount of the analysis object that is removed by laser light irradiation in the standard sample film.

The amount of the analysis object that is removed by laser light irradiation in the standard sample film can be calculated using the same method as that of the operation 1. Here, the amount of the analysis object that is removed by laser light irradiation in the standard sample film in the operation Y is 0.

The content of the analysis object in the standard sample film can be controlled based on the amount of the analysis object to be added during the formation of the standard sample film. The content of the analysis object in the standard sample film to be used can be appropriately adjusted depending on the content of the analysis object in the analysis sample.

In the operation 2, in a case where the horizontal axis represents the content of the analysis object in the standard sample film and the vertical axis represents the signal intensity, two or more points are plotted. Therefore, the regression equation can be created based on the plots. The regression equation can be created, for example, by linear regression. In a case where the regression equation is created by linear regression, an absolute value of a value at an intersection between a straight line of the regression equation and the horizontal axis represents the amount of the analysis object in the analysis sample removed by laser light irradiation.

In a case where the operation X is performed two or more times in the operation 2, the regression equation can be created by determining a coefficient or the like with a least-squares method or the like using each of the plots.

In addition, the concentration of the analysis object in the analysis sample can be calculated from the amount of the analysis object in the analysis sample removed by laser light irradiation and the amount of the analysis sample removed by laser light irradiation. As the amount of the analysis sample removed by laser light irradiation, for example, the volume of the analysis sample removed by laser light irradiation can be used, and the volume density of the analysis object in the analysis sample can be calculated. The volume of the analysis sample removed by laser light irradiation can be calculated by performing the above-described method of measuring the shape on the laminate for analysis after laser light irradiation.

In addition, by separately measuring the density of the analysis sample in a state where the volume density of the analysis object in the analysis sample is calculated, the mass density of the analysis object in the analysis sample can be calculated. As a method of measuring the density, a well-known method is applicable.

The coefficient or the like in the regression equation obtained from the procedure may also be corrected based on the amount of the analysis sample removed by laser light irradiation. Examples of the correction include the same method as the method according to the first embodiment.

In a case where the laminate for analysis includes two or more kinds of analysis objects, the regression equation of each of the analysis objects is created using the procedure, and the amount of the analysis object in the analysis sample is calculated.

<Third Embodiment>

In the third embodiment of the analysis method according to the embodiment of the present invention, a regression equation is created based on a value of a signal intensity obtained by performing the following operation 3 and an amount of an analysis object that is removed by laser light irradiation in a standard sample film, and the regression equation is used to calculate an amount of the analysis object that is removed by laser light irradiation in a solid analysis sample including the analysis object.

The operation 3: the operation X is performed at least once and at least an operation Z of disposing a reference sample film not including the analysis object on the analysis sample to obtain a laminate for reference, irradiating the laminate for reference with laser light, and detecting a signal intensity derived from the analysis object in the analysis sample is performed.

The operation X is the same as described above in the first embodiment, and thus the description thereof will not be repeated.

Hereinafter, the operation Z will be described.

[Operation Z]

In the operation Z, a reference sample film not including the analysis object is disposed on the analysis sample to obtain a laminate for reference, the laminate for reference is irradiated with laser light, and a signal intensity derived from the analysis object is detected in the analysis sample.

The analysis sample and the analysis object are as described above in the first embodiment.

The operation Z is different from the operation X of irradiating the laminate for analysis with laser light, in that the laminate for reference is irradiated with laser light. However, the other points are the same as those of the operation X.

Preferable conditions of the laser light irradiation are the same as those of the operation X. In addition, a preferable aspect during the detection of the signal intensity is the same as that of the operation X.

(Laminate for Reference)

The laminate for reference is the same as that of the laminate for analysis, except that the reference sample film is used instead of the standard sample film.

(Reference Sample Film)

The reference sample film used for obtaining the laminate for reference is the same as the standard sample film, except that the standard sample film does not substantially include the analysis object. The reference sample film not substantially including the analysis object represents that a signal intensity derived from the analysis object is not detected in the method of detecting the signal intensity.

A preferable aspect of the reference sample film is the same as the preferable aspect of the standard sample film, except that it does not include the analysis object.

The reference sample film may be formed without adding the analysis object in the method of forming the standard sample film.

[Operation 3 and Creation of Regression Equation]

As described above, in the third embodiment of the analysis method according to the embodiment of the present invention, the following operation 3 is performed.

The operation 3: the operation X is performed at least once and at least an operation Z of disposing a reference sample film not including the analysis object on the analysis sample to obtain a laminate for reference, irradiating the laminate for reference with laser light, and detecting a signal intensity derived from the analysis object in the analysis sample is performed.

That is, in the operation 3, the operation X is performed once or more on the laminate for analysis, and the operation Z is performed on the laminate for reference. In the operation X, a signal intensity derived from the analysis object in the standard sample film and derived from the analysis object in the analysis sample is detected, and in the operation Z, a signal intensity derived from the analysis object in the analysis sample is detected.

In the operation 3, the number of the laminates for analysis on which the operation X is performed is one or more.

However, the operation X may also be performed on two or more laminates for analysis where the concentrations of the analysis objects in the standard sample film are different. However, the number of the laminates for analysis where the concentrations of the analysis objects in the standard sample film are different and on which the operation X is performed can be adjusted depending on desired analysis accuracy. From the viewpoint of the analysis accuracy, the number of the laminates for analysis where the concentrations of the analysis objects in the standard sample film are different and on which the operation X is performed is preferably 3 to 20, more preferably 5 to 20, and still more preferably 5 to 10.

Next, the regression equation is created based on the value of the signal intensity obtained in the operation 3 and the amount of the analysis object that is removed by laser light irradiation in the standard sample film.

The amount of the analysis object that is removed by laser light irradiation in the standard sample film can be calculated using the same method as that of the operation 1. Here, the amount of the analysis object that is removed by laser light irradiation in the standard sample film in the operation Z is 0.

The content of the analysis object in the standard sample film can be controlled based on the amount of the analysis object to be added during the formation of the standard sample film. The content of the analysis object in the standard sample film to be used can be appropriately adjusted depending on the content of the analysis object in the analysis sample.

In the operation 3, in a case where the horizontal axis represents the content of the analysis object in the standard sample film and the vertical axis represents the signal intensity, two or more points are plotted. Therefore, the regression equation can be created based on the plots. The regression equation can be created, for example, by linear regression. In a case where the regression equation is created by linear regression, an absolute value of a value at an intersection between a straight line of the regression equation and the horizontal axis represents the amount of the analysis object in the analysis sample removed by laser light irradiation.

In a case where the operation X is performed two or more times in the operation 3, the regression equation can be created by determining a coefficient with a least-squares method or the like using each of the plots.

In addition, the concentration of the analysis object in the analysis sample can be calculated from the amount of the analysis object in the analysis sample removed by laser light irradiation and the amount of the analysis sample removed by laser light irradiation. As the amount of the analysis sample removed by laser light irradiation, for example, the volume of the analysis sample removed by laser light irradiation can be used, and the volume density of the analysis object in the analysis sample can be calculated. The volume of the analysis sample removed by laser light irradiation can be calculated by performing the above-described method of measuring the shape on the laminate for analysis after laser light irradiation.

In addition, by separately measuring the density of the analysis sample in a state where the volume density of the analysis object in the analysis sample is calculated, the mass density of the analysis object in the analysis sample can be calculated. As a method of measuring the density, a well-known method is applicable.

The coefficient or the like in the regression equation obtained from the procedure may also be corrected based on the amount of the analysis sample removed by laser light irradiation. Examples of the correction include the same method as the method according to the first embodiment.

In a case where the laminate for analysis includes two or more kinds of analysis objects, the regression equation of each of the analysis objects is created using the procedure, and the amount of the analysis object in the analysis sample is calculated.

<Fourth Embodiment>

In the fourth embodiment of the analysis method according to the embodiment of the present invention, a regression equation is created based on a value of a signal intensity obtained by performing the following operation 4 and an amount of an analysis object that is removed by laser light irradiation in a standard sample film, and the regression equation is used to calculate an amount of the analysis object that is removed by laser light irradiation in a solid analysis sample including the analysis object.

The operation 4: the operation X is performed two or more times while changing the number of the standard sample films laminated or a thickness of the standard sample film.

The operation X is the same as described above in the first embodiment, and thus the description thereof will not be repeated.

[Operation 4 and Creation of Regression Equation]

As described above, in the fourth embodiment of the analysis method according to the embodiment of the present invention, the following operation 4 is performed.

The operation 4: the operation X is performed two or more times while changing the number of the standard sample films laminated or a thickness of the standard sample film.

That is, the operation X is performed on two or more laminates for analysis where the numbers of the standard sample films laminated or the thicknesses thereof are different, to detect a signal intensity derived from the analysis object in the standard sample film and derived from the analysis object in the analysis sample.

In the operation 4, the number of the laminates for analysis where the numbers of the standard sample films laminated or the thicknesses thereof are different and on which the operation X is performed is 2 or more. However, the number of the laminates for analysis where the numbers of the standard sample films laminated or the thicknesses thereof are different and on which the operation X is performed can be adjusted depending on desired analysis accuracy. From the viewpoint of the analysis accuracy, the number of the laminates for analysis where the concentrations of the analysis objects are different and on which the operation X is performed is preferably 3 to 20, more preferably 5 to 20, and still more preferably 5 to 10.

Next, the regression equation is created based on the value of the signal intensity obtained in the operation 4 and the amount of the analysis object that is removed by laser light irradiation in the standard sample film.

The amount of the analysis object that is removed by laser light irradiation in the standard sample film can be calculated from the volume of the standard sample film removed by laser light irradiation and the known content of the analysis object in the standard sample film.

The volume of the standard sample film removed by laser light irradiation can be calculated from a previously measured film thickness of the standard sample film and the area of the region of the standard sample film removed by laser light irradiation. A method of measuring the film thickness of the standard sample film is as described above. The area of the removed region of the standard sample film can be calculated, for example, by measuring a shape. The measurement of the shape may be performed on the laminate for analysis after laser light irradiation, or can be performed, for example, using an optical microscope, an optical interferometer, or a stylus profiler.

The content of the analysis object in the standard sample film can be controlled based on the number of the standard sample films laminated or the thickness of the standard sample film. In a case where the number of the standard sample films laminated or the thickness of the standard sample film is changed, the amount of the analysis object per unit area of the standard sample film changes, and the amount of the analysis object that is removed by laser light irradiation in the standard sample film can be controlled. That is, it is preferable that, in the operation 4, the laminates for analysis are obtained such that the amounts of the analysis objects per unit area of the standard sample film are different.

In addition, as described in the first embodiment, the content of the analysis object in the standard sample film can be controlled based on the amount of the analysis object to be added during the formation of the standard sample film. The content of the analysis object in the standard sample film to be used can be appropriately adjusted depending on the content of the analysis object in the analysis sample.

In the operation 4, in a case where the laminate for analysis is obtained while changing the number of the standard sample films laminated, the standard sample films that are different in at least one of the concentration of the analysis object or the thickness may be laminated to obtain a laminate for analysis.

For example, the standard sample films having the same thickness and the same concentration of the analysis object may be laminated, or the standard sample films having the same thickness and different concentrations of the analysis objects may be laminated. In addition, the standard sample film having different thicknesses and the same concentration of the analysis object may be laminated, or the standard sample films having different thicknesses and different concentrations of the analysis objects may be laminated.

In a case where the standard sample films having the same thickness and the same concentration of the analysis object are laminated, only one kind of the standard sample films needs be prepared, which is simple and preferable.

The number of the standard sample films laminated is not particularly limited and is preferably 2 to 10.

The amount of the analysis object per unit area of the standard sample film can be controlled based on the number of the standard sample films laminated, the concentrations of the analysis objects in the standard sample films laminated, and the thickness of the standard sample film.

In the operation 4, a concentration of the analysis object in the standard sample film and a preferable thickness of the standard sample film are the same as the preferable ranges of the standard sample film described in the first embodiment, respectively.

In the operation 4, in a case where the standard sample films are laminated, as described in the first embodiment, the standard sample film may be laminated in a state where the standard sample film and the substrate are laminated. In addition, in a state where the standard sample film and the substrate (temporary support) are laminated, the standard sample film may be disposed on the analysis object, the substrate (temporary support) may be peeled off, and subsequently another standard sample film may be laminated.

In addition, in a case where the standard sample films are laminated, the standard sample films may be laminated using a porous adhesive tape in the following procedure. Hereinafter, an example of the procedure of laminating the standard sample films will be described with reference to the drawings.

FIG. 3 is a top view showing a porous adhesive tape 52 used in one aspect of changing the number of standard sample films laminated. The porous adhesive tape 52 shown in FIG. 3 is an adhesive tape where an adhesive layer is disposed on one surface and that has a circular hole H.

As the porous adhesive tape 52, a well-known adhesive tape can be used, and a commercially available product can also be applied. In addition, the shape of the hole H of the porous adhesive tape 52 is not particularly limited and may be another shape such as a rectangular shape. In addition, only one hole H is provided in the aspect shown in FIG. 3, but a plurality of holes H may be provided. The size of the hole H is preferably larger than the irradiation region of the laser light irradiation that is performed in the operation X. The irradiation region of laser light is as described above in the first embodiment.

The hole H can be formed using a well-known method. For example, the hole H may be formed by punching using a blade, or may be formed by cutting a part of the adhesive tape with a cutter or the like.

FIGS. 4A to 4E are schematic cross sectional views showing a procedure of one aspect of changing the number of standard sample films laminated.

First, as shown in FIG. 4A, a standard sample film 12c is disposed on one surface of a temporary support 12d, and the porous adhesive tape 52 is bonded to a surface of the standard sample film 12c opposite to the temporary support 12d side.

After bonding the porous adhesive tape 52 to the standard sample film 12c, as shown in FIG. 4B, the porous adhesive tape 52 is pulled up in a direction opposite to the temporary support 12d side to peel off the standard sample film 12c and the temporary support 12d at an interface therebetween. In a case where the standard sample film 12c and the temporary support 12d are peeled off at an interface therebetween, a state where the standard sample film 12c and the porous adhesive tape 52 are laminated is established (refer to FIG. 4C).

Next, the laminate where the standard sample film 12c and the porous adhesive tape 52 are laminated is bonded to an analysis sample 14c. The bonding of the laminate is performed such that the standard sample film 12c and the analysis sample 14c are in contact with each other (refer to FIG. 4D). In a case where the laminate is bonded, a laminate for analysis 20a that can be subjected to the operation X is obtained.

After obtaining the laminate for analysis 20a shown in FIG. 4D, in a case where the laminate (the laminate where the standard sample film 12c and the porous adhesive tape 52 are laminated) is laminated, a laminate for analysis 20b where the standard sample film 12c is laminated is obtained (refer to FIG. 4E). By repeating the lamination of the laminate, the number of the standard sample films laminated can be changed. In addition, in the obtained laminate for analysis (the laminate for analysis 20a or the laminate for analysis 20b), the standard sample film 12c can be directly irradiated with laser light through the hole of the porous adhesive tape 52.

The lamination of the laminate on the laminate for analysis 20a shown in FIG. 4D may be performed after removing the porous adhesive tape 52. In a case where the porous adhesive tape 52 is removed, it is preferable that the standard sample film 12c is notched along the shape of the hole (refer to the hole H of FIG. 3) of the porous adhesive tape 52, such that the standard sample film 12c having the same shape as the shape of the hole of the porous adhesive tape 52 is laminated on the analysis sample 14c.

In addition, in FIG. 4E, the standard sample film 12c to be laminated and the standard sample film 12c laminated on the analysis sample 14c are disposed to overlap each other as a whole in a view from the thickness direction. However, in the view from the thickness direction, the standard sample films 12c may be disposed to overlap each other only partially. In a case where the standard sample films 12c are disposed to overlap each other only partially, a region where the two standard sample films 12c overlap each other and a region where the two standard sample films 12c do not overlap each other can be formed.

Further, the standard sample films may be laminated using porous adhesive tapes having different shapes of holes.

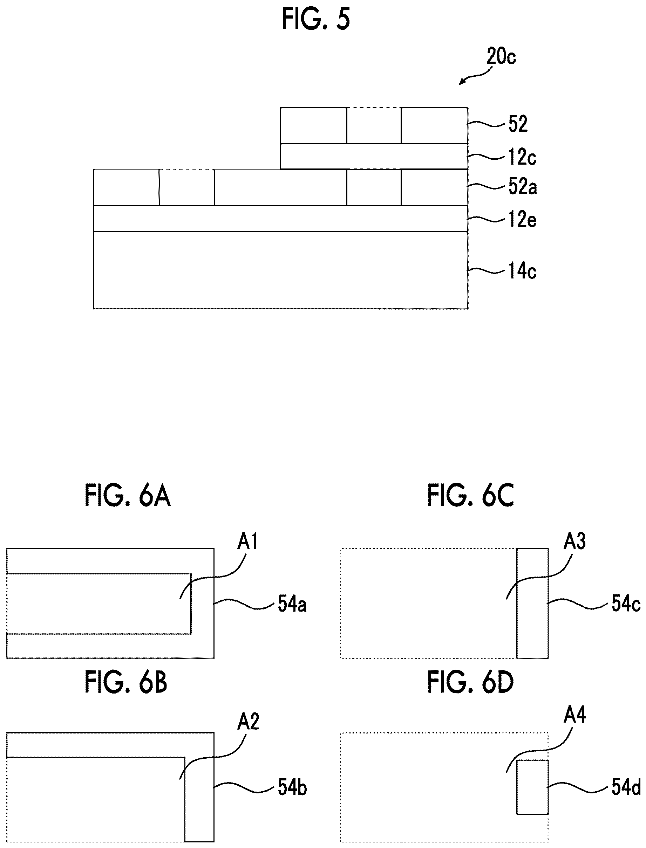

More specifically, as shown in FIG. 5, a standard sample film 12e may be laminated on the analysis sample 14c using a porous adhesive tape 52a having two holes, and the standard sample film 12c may be laminated using the porous adhesive tape 52 having one hole to obtain a laminate for analysis 20c. By laminating the standard sample film in the aspect shown in FIG. 5, the two standard sample films (the standard sample film 12e and the standard sample film 12c) are laminated in a region on the right side of the paper plane of FIG. 5, and one standard sample film (the standard sample film 12e) is present in a region on the left side of the paper plane of FIG. 5. In the laminate for analysis 20c, by changing the region where the laser light irradiation is performed, the operation 4 can be simply performed.

The laminate for analysis 20c shown in FIG. 5 is obtained by laminating the standard sample film 12c without removing the porous adhesive tape 52a. However, the laminate for analysis may be obtained by removing the porous adhesive tape 52a.

The porous adhesive tape 52 used in the procedure described using FIGS. 4A to 4E may be in an aspect other than the above-described aspect.

For example, instead of the porous adhesive tape 52, adhesive tapes in aspects of an adhesive tape 54a, an adhesive tape 54b, an adhesive tape 54c, and an adhesive tape 54d shown in FIGS. 6A to 6D may be used.

In a case where a region where the standard sample film is peeled off is rectangular, the adhesive tape 54a shown in FIG. 6A is an aspect including the adhesive tape in a region having a predetermined width from three sides of the rectangle. In a case where the standard sample film is peeled off using the adhesive tape 54a shown in FIG. 6A, the standard sample film is peeled off in a state where a region A1 that is a region surrounded by a solid line and a dotted line is exposed.

In a case where a region where the standard sample film is peeled off is rectangular, the adhesive tape 54b shown in FIG. 6B is in an aspect including the adhesive tape in a region having a predetermined width from two sides of the rectangle. In a case where the standard sample film is peeled off using the adhesive tape 54b shown in FIG. 6B, the standard sample film is peeled off in a region A2 that is a region surrounded by a solid line and a dotted line.

In a case where a region where the standard sample film is peeled off is rectangular, the adhesive tape 54c shown in FIG. 6C is in an aspect including the adhesive tape in a region having a predetermined width from one side of the rectangle. In a case where the standard sample film is peeled off using the adhesive tape 54c shown in FIG. 6C, the standard sample film is peeled off in a region A3 that is a region surrounded by a solid line and a dotted line.

Each of the regions A1 to A3 of the standard sample films that are peeled off by the adhesive tapes 54a to 54c is rectangular in FIGS. 6A to 6D but may have a shape other than the shape shown in FIGS. 6A to 6D. Examples of the regions include a rectangular shape with one or more rounded corners, a polygonal shape, a semicircular shape, a fan shape, and an elliptical shape.

In a case where a region where the standard sample film is peeled off is rectangular, the adhesive tape 54d shown in FIG. 6D is in an aspect including the adhesive tape in a partial region having a predetermined width of one side of the rectangle. In a case where the standard sample film is peeled off using the adhesive tape 54d shown in FIG. 6D, the standard sample film is peeled off in a region A4 that is a region surrounded by a solid line and a dotted line.

The adhesive tape 54d has a rectangular shape but may have a shape other than the shape shown in FIGS. 6A to 6D. Examples of the shape of the adhesive tape other than the above-described shape include a rectangular shape with one or more rounded corners, a polygonal shape, a circular shape, an elliptical shape, a semicircular shape, and a fan shape.

In addition, the adhesive tape (for example, the porous adhesive tape 52, the porous adhesive tape 52a, and the porous adhesive tapes 54a to 54d) used for peeling off the standard sample film may include a region not in contact with the standard sample film. In a case where the adhesive tape includes the region not in contact with the standard sample film, the standard sample film is easily peeled off from the support or the like by gripping this portion.

In the operation 4, in a case where the laminate for analysis is obtained while changing the thickness of the standard sample films, the concentrations of the analysis objects in the standard sample films may be different from each other.

The amount of the analysis object per unit area of the standard sample film can be controlled based on the concentrations of the analysis objects in the standard sample films, and the thickness of the standard sample film.

In the operation 4, a preferable thickness of the standard sample film is the same as the preferable thickness of the standard sample film described in the first embodiment.

In the operation 4, in a case where the horizontal axis represents the content of the analysis object in the standard sample film and the vertical axis represents the signal intensity, two or more points are plotted. Therefore, the regression equation can be created based on the plots. The regression equation can be created, for example, by linear regression. For example, in a case where the regression equation is created by linear regression, an absolute value of a value at an intersection between a straight line of the regression equation and the horizontal axis represents the amount of the analysis object in the analysis sample removed by laser light irradiation.

In a case where the operation X is performed three or more times in the operation 4, the regression equation can be created by determining a coefficient or the like with a least-squares method or the like using each of the plots.

In addition, the concentration of the analysis object in the analysis sample can be calculated from the amount of the analysis object in the analysis sample removed by laser light irradiation and the amount of the analysis sample removed by laser light irradiation. As the amount of the analysis sample removed by laser light irradiation, for example, the volume of the analysis sample removed by laser light irradiation can be used, and the volume density of the analysis object in the analysis sample can be calculated. The volume of the analysis sample removed by laser light irradiation can be calculated by performing the above-described method of measuring the shape on the laminate for analysis after laser light irradiation.

In addition, by separately measuring the density of the analysis sample in a state where the volume density of the analysis object in the analysis sample is calculated, the mass density of the analysis object in the analysis sample can be calculated. As a method of measuring the density, a well-known method is applicable.

The coefficient or the like in the regression equation obtained from the procedure may also be corrected based on the amount of the analysis sample removed by laser light irradiation. In a specific procedure, for example, first, the coefficient or the like in the regression equation is determined without performing the correction using the amount of the analysis sample removed by laser light irradiation. Next, the obtained amount of the analysis object in the analysis sample removed by laser light irradiation and the amount of the ablated analysis sample in the analysis sample are compared to each other to correct the signal intensity in the vertical axis. Based on the corrected signal intensity, the coefficient or the like in the regression equation is obtained again.

The correction using the amount of the analysis sample removed by laser light irradiation may also be performed using a method other than the above-described method.

In a case where the laminate for analysis includes two or more kinds of analysis objects, the regression equation of each of the analysis objects is created using the procedure, and the amount of the analysis object in the analysis sample is calculated.

In addition, in the fourth embodiment, in a case where the regression equation is created, at least one of the operation Y or the operation Z may be performed, and the obtained plot may be added to the plots for creating the regression equation in the fourth embodiment. Examples

The present invention will be described in more detail based on the following Examples.

Materials, used amounts, ratios, treatment details, treatment procedures, and the like shown in the following Examples can be appropriately changed within a range not departing from the scope of the present invention. Accordingly, the scope of the present invention will not be restrictively interpreted by the following Examples.

<Preparation of Standard Sample Film>

Polybutyl methacrylate and a metal dispersion liquid (CONOSTAN STD S-21, manufactured by SCP Science) were added to and dissolved in butyl acetate to obtain a composition for forming the standard sample film. The concentration of polybutyl methacrylate was 10% by mass with respect to the total mass of the composition. In addition, the metal dispersion liquid included a plurality of alkylarylsulfonates having different metal species and paraffin. The addition amount of the metal dispersion liquid was adjusted such that the content of aluminum atoms with respect to the total weight of the standard sample film described below was 100 mass ppm. The metal dispersion liquid included boron atoms, sodium atoms, magnesium atoms, silicon atoms, phosphorus atoms, calcium atoms, titanium atoms, vanadium atoms, chromium atoms, manganese atoms, iron atoms, nickel atoms, copper atoms, zinc atoms, molybdenum atoms, silver atoms, cadmium atoms, tin atoms, barium atoms, and lead atoms in the same mass as aluminum atoms.

In addition, a composition for forming the reference sample film not including the metal dispersion liquid was also prepared for blank measurement (for preparing the reference sample film used in the operation Z). The composition for forming the reference sample film was prepared under the same conditions as those of the composition for forming the standard sample film, except that it does not include the metal dispersion liquid.

The obtained composition for forming the standard sample film was spin-coated (rotation speed: 2000 rpm, time: 20 seconds) on a polyethylene terephthalate (PET) film (length: 2.5 cm, width: 2.5 cm, average film thickness: 4.6 μm) and dried to prepare a standard sample film (the thickness of the standard sample film: 0.5 μm) on the PET film. As a result, a standard sample sheet was obtained. The content of the paraffin with respect to the total mass of the standard sample film excluding the PET film was 8% by mass, and the content of the polybutyl methacrylate was the remainder of the paraffin and a derivative component (for example, an alkylarylsulfonium salt) in the metal dispersion liquid.

The average film thickness of the standard sample sheet (the average value of the total film thickness of the PET film and the standard sample film) was 5.1 μm.

In addition, in the same procedure, the composition for forming the reference sample film was spin-coated to prepare a reference sample film (the average film thickness of the standard sample film: 0.5 μm) on the PET film. As a result, a reference sample sheet was obtained.

<Preparation of Laminate for Analysis>

By using a sample (hereinafter, also referred to as "ashed sample") obtained by ashing rock as an unknown sample for determining element contents, the ashed sample was pelletized using a pellet frame (Clear Disk, manufactured by JASCO Engineering CO., LTD., 20 mmφ, pellet hole 5 mmφ, thickness 1.2 mm) and a handy press machine. A double-sided tape (FIXFILM (manufactured by FUJICOPIAN CO., LTD.)) as a protective layer for bonding the standard sample film was bonded to one single surface of the pellet frame.

By bonding the standard sample sheet and the pellet frame such that the surface of the pellet frame to which the double-sided tape was bonded and the standard sample film side of the standard sample sheet faced each other, a laminate for analysis (laminate for analysis according to Examples) was obtained.

In the double-sided tape, a peel force of one surface is different from a peel force of the other surface. In order to obtain the laminate for analysis, the double-sided tape was bonded such that the pellet frame faced the side of the double-sided tape having a higher peel force and the standard sample sheet faced the side of the double-sided tape having a lower peel force. In the obtained laminate for analysis, the standard sample sheet was able to be peeled off from the double-sided tape and was able to be bonded again to the standard sample sheet.

A structure of the laminate for analysis obtained in the procedure will be described using FIGS. 2A and 2B. In FIGS. 2A and 2B, for convenience of description, the size ratio may be different from the actual size ratio.

FIG. 2A is a top view showing the obtained laminate for analysis 40 according to Example. FIG. 2B is a schematic cross sectional view showing the laminate for analysis 40 according to Example taken along line AA of FIG. 2A.

In the laminate for analysis 40 according to Example, as shown in FIG. 2B, the double-sided tape 18 was disposed on one surface of the cylindrical pellet frame 16, and a through-hole was provided in the pellet frame 16 and the double-sided tape 18. The through-hole was filled with an analysis sample 14b from the surface of the pellet frame 16 where the double-sided tape 18 was disposed to the surface of the double-sided tape 18 opposite to the pellet frame 16 side.

A standard sample film 12a was disposed to be in contact with the surface of the analysis sample 14b on the double-sided tape 18 side, and a PET film 12b was disposed on the surface of the standard sample film 12a opposite to the analysis sample 14b side.

The laminate for analysis 40 according to Example shown in FIGS. 2A and 2B corresponds to the above-described laminate for analysis.

In addition, a laminate for reference according to Example was obtained in the same procedure as the procedure of obtaining the laminate for analysis according to Example, except that the standard sample sheet was changed to the reference sample sheet. That is, the laminate for reference according to Example including the analysis sample, the reference sample film, and the PET film in this order from the analysis sample side was obtained.

<Analysis Method>

[Analysis Conditions by LA-ICP-MS]

Using the obtained laminate for analysis according to Example and the laminate for reference according to Example, femtosecond laser ablation-inductively coupled plasma-mass spectrometry was performed. That is, the operation X and the operation Z of irradiating each of the laminate for analysis according to Example and the laminate for reference according to Example with laser light and performing analysis by LA-ICP-MS to obtain a signal intensity were performed.

As a femtosecond laser ablation device, a Jupiter solid nebulizer (manufactured by ST Japan INC.) was used. Various conditions were as follows.

(Device Conditions such as Laser Conditions)

· Laser device: LPS MultiProbe
. Laser wavelength: 260 nm
· Laser power (fluence): 5.0 to 15.0 J/cm$^2$
· Laser pulse width: 247 fs
· Laser frequency: 10000 Hz
· Irradiation time: about 2 seconds
· Irradiation range: 1 mm in length $\times$ 1 mm in width
· Carrier gas: He gas added at rate of 0.6 L/min in sample chamber and Ar gas added at rate of 1.1 L/min immediately after passing sample chamber

(ICP-MS Conditions)

· MS measurement device: iCAP TQ (manufactured by Thermo Fisher Scientific, Inc.)
· RF power: 1550 W
· Cooling gas flow rate: 14 L/min
· Auxiliary gas flow rate: 0.8 L/min

[Mass Spectrometry of Ablated Analysis Sample]

After LA-ICP-MS, the laminate for analysis according to Example and the laminate for reference according to Example were observed using a microscope for morphological observation to obtain an ablation area of the standard sample film and a depth of an ablation mark of the ashed sample (analysis sample). The obtained ablation mark depth was multiplied by the ablation area to calculate the volume, and the volume was multiplied by the density of the ashed sample calculated by gravimetry to calculate the ablation mass (M).

[Determination of Element Contents]

Element determination was performed in the following procedure. By LA-ICP-MS, values of Y0, Y1, and X1 were acquired to calculate X2.

Y0: ICP-MS signal intensity of analysis object of laminate for reference according to Example
Y1: ICP-MS signal intensity of analysis object of laminate for analysis according to Example
X1: Mass of analysis object in standard sample film of laminate for analysis according to Example (ablation area of standard sample film) $\times$ 0.5 $\mu$m
X2: In case where x-axis represents mass of analysis object in (ablation area of standard sample film) $\times$ 0.5 $\mu$m and y-axis represents the signal intensity, absolute value of x-axis intercept of straight line connecting $(x,y) = (0,Y0)$ and $(x,y) = (X1,Y1)$

By dividing the obtained value of X2 by the mass of the ablated ashed sample, the mass concentration of the analysis object in the ashed sample was calculated.

<Results>

By setting nickel, vanadium, chromium, molybdenum, and cadmium as the analysis object, the mass concentration of the analysis object in the ashed sample was calculated using the above-described method. The results are shown in the table.

In order to verify reproducibility, the measurement and the operation were performed using the same ashed sample, and the mass concentration of the analysis object was measured again. As a result, in both of the measurements, the mass concentration was obtained such that error ranges of the measurements overlapped each other. The error range was calculated through the operation by ablating areas of 1 mm $\times$ 1 mm not overlapping each other in the same analysis sample to obtain the signal intensity three times.

[Table 1]

| | Element Mass Concentration [mg/kg] | | | | |
|---|---|---|---|---|---|
| | Ni | V | Cr | Mo | Cd |
| First Measurement | 132 | 63 | 94 | 17 | 0.4 |
| Error Range of First Measurement | ±10 | ±20 | ±10 | ±4 | ±0.1 |
| Second Measurement | 118 | 98 | 85 | 20 | 0.3 |
| Error Range of Second Measurement | ±10 | ±20 | ±10 | ±5 | ±0.1 |

It was verified from the results shown in Table 1 that, according to the analysis method according to the embodiment of the present invention, the analysis of the analysis object in the solid sample can be simply performed.

In Example, the method of the third embodiment of performing the operation 3 was shown. Even in the methods shown in the first embodiment of performing the operation 1 and the second embodiment of performing the operation 2, the analysis of the analysis object in the solid sample can be simply performed.

More specifically, in the aspect of Example, in a case where a standard sample film where the content of metals are different from the above-described values is prepared, a laminate for analysis is obtained in the same procedure, a signal is acquired by LA-ICP-MS, and a regression equation was created using the above-described method, the value corresponding to X2 can be calculated (first embodiment).

In addition, in the aspect of Example, in a case where the sample where the reference sample film is not provided is irradiated with laser light and a signal is acquired by LA-ICP-MS, the value corresponding to Y0 can be obtained, and the value corresponding to X2 can be calculated (second embodiment).

In addition, in the procedure, a standard sample sheet was prepared while changing the thickness of the PET film used for obtaining the standard sample sheet, and the analysis of the analysis object in the solid sample was performed in the same procedure as the above-described procedure using the prepared standard sample sheet.

PET films having thicknesses of 19 $\mu$m, 20 $\mu$m, 1 $\mu$m, and 0.5 $\mu$m were prepared, a standard sample sheet was prepared for each of the PET films, and the analysis was performed. That is, the average film thicknesses of the standard sample sheets (the average values of the total film thicknesses of the PET films and the standard sample films) were 19.5

μm, 20.5 μm, 1.5 μm, and 1.0 μm, respectively. The results are shown in Table 2.

[Table 2]

| | | Element Mass Concentration [mg/kg] | | | | |
|---|---|---|---|---|---|---|
| | | Ni | V | Cr | Mo | Cd |
| Standard Sample Sheet 19.5 μm | First Measurement | 80 | 30 | 45 | 10 | 0.3 |
| | Error Range of First Measurement | ±40 | ±25 | ±20 | ±6 | ±0.2 |
| | Second Measurement | 90 | 40 | 55 | 25 | 0.3 |
| | Error Range of Second Measurement | ±30 | ±30 | ±30 | ±15 | ±0.2 |
| Standard Sample Sheet 20.5 μm | First Measurement | 65 | 40 | 32 | 20 | 0.4 |
| | Error Range of First Measurement | ±60 | ±35 | ±30 | ±10 | ±0.3 |
| | Second Measurement | 90 | 85 | 44 | 33 | 0.3 |
| | Error Range of Second Measurement | ±65 | ±38 | ±33 | ±20 | ±0.3 |
| Standard Sample Sheet 1.5 μm | First Measurement | 100 | 48 | 60 | 15 | 0.5 |
| | Error Range of First Measurement | ±45 | ±36 | ±25 | ±8 | ±0.3 |
| | Second Measurement | 50 | 23 | 25 | 10 | 0.2 |
| | Error Range of Second Measurement | ±30 | ±30 | ±30 | ±8 | ±0.2 |
| Standard Sample Sheet 1.0 μm | First Measurement | 50 | 50 | 33 | 10 | 0.4 |
| | Error Range of First Measurement | ±49 | ±40 | ±25 | ±8 | ±0.4 |
| | Second Measurement | 130 | 90 | 76 | 33 | 0.9 |
| | Error Range of Second Measurement | ±100 | ±85 | ±63 | ±30 | ±0.8 |

It was verified from the results of Table 2 that, according to the analysis method according to the embodiment of the present invention, the analysis of the analysis object in the solid sample can be simply performed.

It was verified from a comparison between the results of Table 2 and the results of Table 1 that, in a case where the average film thickness of the standard sample sheet (the average value of the total film thickness of the PET film and the standard sample film) was 20 μm or less (preferably 15 μm or less, more preferably 10 μm or less, and still more preferably 8 μm or less), the error range was small, and the analysis accuracy was higher.

In addition, it was verified from a comparison between the results of Table 2 and the results of Table 1 that, in a case where the average film thickness of the standard sample sheet (the average value of the total film thickness of the PET film and the standard sample film) was 1.2 μm or more (preferably 2.0 μm or more, more preferably 3.0 μm or more, and still more preferably 3.5 μm or more), the error range was small, and the analysis accuracy was higher. The reason for this is considered to be that, in a case where the average film thickness of the standard sample sheet was in the above-described range, the handleability of the standard sample sheet was excellent, wrinkling or the like did not occur in the standard sample sheet during the bonding of the standard sample sheet, and bonding was able to be more smoothly performed.

Separately from Example, a standard sample film was prepared, and the analysis was performed in the following procedure.

<Preparation of Standard Sample Film>

Polybutyl methacrylate, a metal dispersion liquid (CONOSTAN STD, manufactured by SCP Science), and a surfactant (MEGAFACE R-41, manufactured by DIC Corporation)were added to and dissolved in butyl acetate to obtain a solution. The concentration of polybutyl methacrylate was 15% by mass with respect to the total mass of the solution, and the concentration of the surfactant was 0.05% by mass with respect to the total mass of the solution. The metal dispersion liquid was adjusted and added such that the concentration of each of the elements in the standard sample film was 100 mass ppm.

The obtained solution was spin-coated on a disk-shaped silicon wafer (4.0 inch in diameter × 0.5 mm in thickness) and was baked on a hot plate at 200°C for 5 minutes to form a standard sample film having a thickness of 3 μm on the silicon wafer.

<Preparation of Laminate for Analysis>

First, a hole having a diameter of 6 mm was formed using a punching machine at a width center position of an adhesive tape having a width of 10 mm. Next, the silicon wafer with the standard sample film was cleaved into about 1 cm square.

The adhesive tape where a hole was formed was bonded to the cleaved silicon wafer with the standard sample film such that the hole matched with the center of the silicon wafer, and the adhesive tape was peeled off. In a case where the adhesive tape was peeled off, peeling occurred from an interface between the silicon wafer and the standard sample film, and the standard sample film was transferred to the adhesive tape side. In the procedure, only the standard sample film was present in the hole portion of the adhesive tape.

Next, a certified reference material NIST SRM 612 was prepared as the analysis sample. After polishing the surface of the analysis sample, in the standard sample film attached to the adhesive tape, the adhesive tape was bonded to the analysis sample such that the standard sample film and the polished surface of the analysis sample were in contact with each other. The standard sample film was bonded to two positions of the polished surface of the analysis sample.

In addition, another standard sample film was disposed on and bonded to one side of the standard sample film. In this case, the bonding was performed such that the hole portions of the adhesive tapes substantially matched with each other. As a result, a laminate for analysis was obtained. On the polished surface of the analysis sample of the laminate for analysis, a region where one standard sample film was attached and a region where two standard sample films were disposed and bonded were present.

<Analysis Method>

[Analysis Conditions by LA-ICP-MS]

The laminate for analysis obtained in the procedure was irradiated with laser light and was analyzed by LA-ICP-MS to obtain a signal intensity. Specifically, a region of the laminate for analysis where the standard sample film was not bonded, a region where one standard sample film was bonded, and a region where two standard sample films were bonded were irradiated with laser light under the following conditions and were analyzed by LA-ICP-MS. That is, the operation Y was performed once, and the operation X was performed two times while changing the number of the standard sample films laminated.

(Device Conditions such as Laser Conditions)

· Laser output: 50 mW
· Irradiation range: 0.5 mm in length $\times$ 0.5 mm in width

Conditions other than the above-described conditions are as described above.

[Mass Spectrometry of Ablated Analysis Sample]

After LA-ICP-MS, the laminate for analysis was observed using a microscope for morphological observation to obtain an ablation area of the standard sample film and a depth of an ablation mark of the analysis sample. The obtained ablation mark depth was multiplied by the ablation area to calculate the volume, and the volume was multiplied by the density of the analysis sample to calculate the ablation mass (M).

[Determination of Element Contents]

Element determination was performed in the following procedure. By LA-ICP-MS, values of Y3, Y4, Y5, X3, X4, and X5 were acquired to create a calibration curve.

Y3: ICP-MS signal intensity of analysis object in region of laminate for analysis where standard sample film was not attached

Y4: ICP-MS signal intensity of analysis object in region of laminate for analysis where one standard sample film was attached

Y5: ICP-MS signal intensity of analysis object in region of laminate for analysis where two standard sample films were attached

X3: 0

X4: Mass of analysis object in standard sample film of laminate for analysis according to Example (ablation area of standard sample film) $\times$ 3 $\mu$m

X5: Two times of value of mass of analysis object in standard sample film of laminate for analysis according to Example (ablation area of standard sample film) $\times$ 3 $\mu$m

A regression equation was created by linear regression from plots of (X3,Y3), (X4,Y4), and (X5,Y5). Specifically, fitting was performed using a least-squares method to create a calibration curve, and an X intercept of the calibration curve was obtained.

By dividing the obtained value of the X intercept of the calibration curve by the mass of the ablated analysis sample, the mass concentration of the analysis object in the analysis sample was calculated.

Assuming that antimony was uniformly dispersed in the analysis sample, the signal intensity was corrected by using the signal intensity of antimony as an internal standard.

<Results>

By setting titanium, chromium, manganese, barium, and lead as the analysis object, the mass concentration of the analysis object in the analysis sample was calculated using the above-described method. For each of the elements, a calibration curve having a high determination coefficient was obtained.

The results and NIST certified values are shown in Table 3 below. "Quantitative Value" in Table 3 shows the mass concentration of the analysis object calculated using the above-described method.

[Table 3]

| Element | NIST Certified Value (mg/kg) | Quantitative Value (mg/kg) |
|---------|------------------------------|----------------------------|
| Ti | 50.1 | 55.0 |
| Cr | 35.0 | 39.4 |
| Mn | 37.7 | 43.9 |
| Ba | 38.6 | 46.7 |
| Pb | 38.6 | 40.6 |

It was verified from the results shown in Table 3 that a value close to the NIST certified value was obtained as the analysis value obtained in the analysis method according to the embodiment of the present invention, and according to the present invention, the analysis of the analysis object in the solid sample can be simply performed.

In Example, the method of the fourth embodiment of performing the operation 4 was shown. However, even in the methods shown in the first embodiment to the third embodiment of performing the operations 1 to 3, respectively, the analysis of the analysis object in the solid sample can be simply performed.

In addition, in the procedure of obtaining the standard sample film by spin coating on the silicon wafer, the amount of paraffin in the standard sample film was adjusted, and the film thickness was adjusted to form the standard sample film. Here, the formed standard sample film was peeled off from the silicon wafer using the adhesive tape including the hole portion, and whether or not the standard sample film was able to be obtained in a state where only the standard sample film was present in the hole portion of the adhesive tape was verified.

More specifically, the preparation amount was adjusted such that the content of paraffin with respect to the total mass of the standard sample film was as shown in Table 4, and the concentration, the coating amount, and the like of the solution were adjusted to obtain a thickness shown in Table 4 below. As a result, the standard sample film was formed.

In the column "Tape Peeling" of Table 4, in a case where the standard sample film was peeled using the adhesive tape including the hole portion, the standard sample film that was able to be obtained in a state where only the standard sample film was present in the hole portion of the adhesive tape was shown as "A". In addition, in a case where the standard sample film was peeled using the adhesive tape including the hole portion, the standard sample film that was not able to be obtained in a state where only the standard sample film was present in the hole portion of the adhesive tape was shown as "B".

The solution used for obtaining the standard sample film was prepared by further adding paraffin to the solution used in the procedure of obtaining the standard sample film by spin coating on the silicon wafer. The content of paraffin was 0.1% to 3.0% by mass with respect to the total mass of the solution, and the content of polybutyl methacrylate was 6% to 15% by mass with respect to the mass of the solution.

The content of paraffin in the standard sample film was calculated by $^1$H NMR measurement by dissolving two standard sample films having the same area in deuterated THF, the standard sample films being prepared under the same conditions, except for whether or not to perform baking. More specifically, a peak surface area derived from paraffin was normalized with a peak surface area derived from the polymer (polybutyl methacrylate), and the peak surface areas derived from paraffin in the two standard sample films were compared to each other to calculate the volatilization amount of paraffin in the process of baking. By calculating the amount of paraffin remaining after baking from the preparation value of paraffin in the solution and the volatilization amount and dividing the calculated amount of paraffin by the mass of the standard sample film remaining after baking, the paraffin content in the standard sample film was calculated.

[Table 4]

| Film Thickness of Standard Sample Film ($\mu$m) | Content of Paraffin (% by mass) | Tape Peeling |
|---|---|---|
| 3.0 | 14.0 | A |
| 3.0 | 1.6 | A |
| 1.5 | 12.4 | A |
| 1.5 | 1.4 | A |
| 0.5 | 1.2 | A |

In the results shown in Table 4, in a case where the standard sample film was peeled using the adhesive tape including the hole portion, all of the standard sample films were able to be obtained in a state where only the standard sample film was present in the hole portion of the adhesive tape.

In addition, in the procedure of obtaining the standard sample film by spin coating on the silicon wafer, the preparation of the standard sample film was performed while changing the surfactant to be used to each of the following surfactants.

As the surfactant, each of KL-400HF, POLYFLOW KL-401, POLYFLOW KL-402,

POLYFLOW KL-700, LE-302N, and LE-304 was used. In a case where the preparation of the standard sample film was performed under the same conditions as described above except for the above-described conditions, the same standard sample film was obtained irrespective of the use of the surfactant, and was able to be peeled off by the tape including the hole portion.

Explanation of References

12, 12a, 12c, 12e: standard sample film
12b: PET film
12d: temporary support
14, 14b, 14c: analysis sample
16: pellet frame
18: double-sided tape
20, 20a, 20b, 20c: laminate for analysis
22: ablation sample
30: laser light
40: laminate for analysis according to Example
52, 52a: porous adhesive tape
54a, 54b, 54c, 54d: adhesive tape

**Claims**

1. An analysis method comprising:

    creating a regression equation based on a value of a signal intensity obtained by performing any one of the following operation 1, 2, 3, or 4 and an amount of an analysis object that is removed by laser light irradiation in a standard sample film; and

using the regression equation to calculate an amount of the analysis object that is removed by laser light irradiation in a solid analysis sample including the analysis object,

the operation 1: an operation X of disposing the standard sample film including the analysis object on the solid analysis sample including the analysis object to obtain a laminate for analysis, irradiating the laminate for analysis with laser light, and detecting a signal intensity derived from the analysis object in the standard sample film and derived from the analysis object in the analysis sample is performed two or more times while changing a concentration of the analysis object in the standard sample film;

the operation 2: the operation X is performed at least once and at least an operation Y of irradiating the analysis sample with laser light and detecting a signal intensity derived from the analysis object in the analysis sample is performed;

the operation 3: the operation X is performed at least once and at least an operation Z of disposing a reference sample film not including the analysis object on the analysis sample to obtain a laminate for reference, irradiating the laminate for reference with laser light, and detecting a signal intensity derived from the analysis object in the analysis sample is performed; and

the operation 4: the operation X is performed two or more times while changing the number of the standard sample films laminated or a thickness of the standard sample film.

2. The analysis method according to claim 1, further comprising:
a process of calculating a concentration of the analysis object in the analysis sample based on the amount of the analysis object that is removed by laser light irradiation in the analysis sample.

3. The analysis method according to claim 1 or 2,
wherein a removal volume of the analysis sample that is removed by laser light irradiation is determined by measuring a shape, and a volume concentration of the analysis object in the analysis sample is calculated based on the removal volume.

4. The analysis method according to claim 1 or 2,
wherein the signal intensity is a signal intensity obtained by mass spectrometry.

# FIG. 1A

30

20

12

14

# FIG. 1B

20

22

12

14

# FIG. 2A

# FIG. 2B

# FIG. 3

## FIG. 4A

52

12c
12d

## FIG. 4B

52

12c

12d

## FIG. 4C

52

12c

## FIG. 4D

20a

52

12c

14c

## FIG. 4E

20b

52

12c

52

12c

14c

EP 4 692 769 A1

34

# FIG. 5

20c

52

12c

52a

12e

14c

# FIG. 6A

A1

54a

# FIG. 6C

A3

54c

# FIG. 6B

A2

54b

# FIG. 6D

A4

54d

**EP 4 692 769 A1**

## INTERNATIONAL SEARCH REPORT

| | International application No. |
|---|---|
| | **PCT/JP2024/008246** |

| | | |
|---|---|---|
| **A.** | **CLASSIFICATION OF SUBJECT MATTER** | |

*G01N 21/71*(2006.01)i; *G01N 21/73*(2006.01)i; *G01N 27/62*(2021.01)i
FI:   G01N21/71; G01N21/73; G01N27/62 D

According to International Patent Classification (IPC) or to both national classification and IPC

| | | |
|---|---|---|
| **B.** | **FIELDS SEARCHED** | |

Minimum documentation searched (classification system followed by classification symbols)

G01N21/71; G01N21/73; G01N27/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| A | WO 2021/157407 A1 (FUJIFILM CORPORATION) 12 August 2021 (2021-08-12) | 1-4 |
| A | JP 3-218444 A (FUJI ELECTRIC CO., LTD.) 26 September 1991 (1991-09-26) | 1-4 |
| A | WO 2023/037392 A2 (DTE EHF.) 16 March 2023 (2023-03-16) | 1-4 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

36

INTERNATIONAL SEARCH REPORT
Information on patent family members

International application No.

**PCT/JP2024/008246**

| Patent document<br>cited in search report | Publication date<br>(day/month/year) | Patent family member(s) | Publication date<br>(day/month/year) |
|---|---|---|---|
| WO 2021/157407 A1 | 12 August 2021 | US 2022/0381737 A1<br>EP 4102541 A1<br>CN 115053130 A<br>KR 10-2022-0125297 A | |
| JP 3-218444 A | 26 September 1991 | (Family: none) | |
| WO 2023/037392 A2 | 16 March 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013238455 A
- US 20080248425 A